# EUROPÄISCHE PATENTSCHRIFT

(11) **EP 3 725 833 B1**
(45) Veröffentlichungstag und Bekanntmachung des Hinweises auf die Patenterteilung: **17.03.2021**
(21) Anmeldenummer: 19169464.5
(22) Anmeldetag: 16.04.2019
(51) Int. Cl.: C08K 3/40, C08K 7/00, C08K 7/14

(54) **VERSTÄRKTE THERMPOLASTISCHE FORMMASSE**
REINFORCED THERMPOLASTISCHE MOULDING COMPOSITION
MATIÈRE THERMOPLASTIQUE DE MOULAGE RENFORCÉ

(43) Veröffentlichungstag der Anmeldung: 21.10.2020
(73) Patentinhaber: EMS-CHEMIE AG, 7013 Domat/Ems (CH)
(72) Erfinder: AEPLI, Etienne, 7013 Domat/Ems (CH)
(74) Vertreter: Bremi, Tobias Hans

(56) Entgegenhaltungen:
- WO-A1-94/22942
- US-A1- 2008 119 603

## Beschreibung

### TECHNISCHES GEBIET

Die vorliegende Erfindung betrifft eine mit Glasfasern verstärkte Polyamid-Formmasse mit guten mechanischen Eigenschaften, guten Oberflächeneigenschaften, beides im trockenen wie im konditionierten Zustand.

### STAND DER TECHNIK

US 3499955 beschreibt die Möglichkeit, gleichzeitig Glasfasern und Glas-Flakes in einer teilweise thermoplastischen Formmasse mit einem Vernetzungsmittel einzusetzen. Das Ziel ist es, möglichst keine Dämpfe einzuschliessen, und die Matrix wird anschliessend vernetzt.

WO-A-94/22942 offenbart Polyamid-Formmassen, die gleichzeitig mit Glasfasern und Glas-Flakes versetzt sind. Als Matrix wird ausschliesslich aliphatisches Polyamid offenbart, Oberflächeneigenschaften und mechanische Eigenschaften werden angegeben, aber nicht verglichen zwischen trockenem Zustand und konditioniertem Zustand. EP-A-0741762 arbeitet Glasfaser-verstärkte Polyamid-Formmassen, die teilweise auf Basis von Mischungen aus Polyamid 66 und Polyamid 6T/DT aufgebaut sind. Mechanische Eigenschaften und Oberflächeneigenschaften sowohl im trockenen Zustand als auch im konditionierten Zustand werden nicht verglichen.

DE-A-10352319 offenbart eine mit Russ eingefärbte und Glasfasern sowie teilchenförmige Füllstoffe enthaltende Polyamidformasse, die witterungsbeständig ist und eine Tiefschwarz-Chromatizität aufweist. Bevorzugt werden kleinteilige partikuläre Füllstoffe mit einem maximalen Durchmesser von 30 µm verwendet. Wie die Beispiele zeigen, wird das Aussehen der Formteile sowie deren Witterungsbeständigkeit im Wesentlichen durch die Eigenschaften des verwendeten Russes bestimmt.

Die US-A-2008/0119603 beschreibt Materialien für Telefon-Gehäuse auf Basis von Polyamid mit Glasfasern und Glas-Flakes. Daten über das Verhalten der Oberfläche oder das mechanische Verhalten im trockenen Zustand verglichen mit einem konditionierten Zustand werden nicht offenbart.

### DARSTELLUNG DER ERFINDUNG

Es ist entsprechend Aufgabe der vorliegenden Erfindung eine gegenüber dem Stand der Technik verbesserte Polyamid-Formmasse bereitzustellen. Insbesondere vorzugsweise sollen dabei gute mechanische Eigenschaften und gute Oberflächeneigenschaften bereitgestellt werden, beides im trockenen wie im konditionierten Zustand.

Die Formmasse soll vorzugsweise eine ausreichende Steifigkeit und Festigkeit und gleichzeitig eine gute Schlagzähigkeit besitzen sowie eine gute Oberflächenqualität, auch in feuchtem Zustand, aufweisen. Konkret bedeutet dies, dass der Zug-E-Modul trocken vorzugsweise wenigstens 15'000 MPa betragen soll, und im konditionierten Zustand nicht mehr als 1500 MPa oder mehr als 1100 MPa unter dem trockenen Wert liegen soll. Zusätzlich oder alternativ soll die Bruchspannung trocken vorzugsweise wenigstens 150 MPa, vorzugsweise wenigstens 200 MPa, betragen, und im konditionierten Zustand nicht mehr als 50 MPa oder mehr als 40 MPa unter dem trockenen Wert liegen. Weiter zusätzlich oder alternativ soll die Schlagzähigkeit trocken vorzugsweise wenigstens 50 kJ/m² oder wenigstens 60 kJ/m² betragen und im konditionierten Zustand nicht mehr als 15 kJ/m² oder mehr als 12 kJ/m² MPa unter dem trockenen Wert liegen. Bevorzugt gelten diese Bedingungen für Zug-E-Modul, Bruchspannung und Schlagzähigkeit gleichzeitig. In Bezug auf die mechanischen Eigenschaften bedeutet Konditionierung, dass die Probenkörper vor der jeweiligen Messung 14 Tage bei 72 °C und einer relativen Feuchte von 62% gelagert wurden. Weiterhin soll vorzugsweise der Glanz gemessen unter einem Winkel von 60° in trockenem Zustand (DAM) sowie auch nach Konditionierung (80 °C, 80% rel. Feuchte, 120 h) mindestens 70% betragen.

Diese Aufgabe wird durch die Polyamid-Formmasse nach Anspruch 1 erfüllt.

Gegenstand der Erfindung ist damit eine Polyamid-Formmasse bestehend aus den Komponenten
(A) 28.0-64.9 Gew.-% wenigstens eines Polyamids,
(B) 15.0-40.0 Gew.-% Glasfasern
(C) 15.0-35.0 Gew.-% Glasflakes mit einer Teilchendicke von im Bereich 0.3 bis 2.0 µm, insbesondere 0.4 bis 1.7 µm
(D) 0.1-2.0 Gew.-% Hitzestabilisator,
(E) 0-5.0 Gew.-% Additive
mit der Massgabe, dass die Summe der Komponenten (B) und (C) im Bereich von 35.0 bis 65.0 Gew.-% liegt, bezogen auf die Summe der Komponenten (A) bis (E). Die Summe der Komponenten (A) bis (E) ergibt dabei 100 Gew.-%.

Die Summe der Komponenten (B) und (C) liegt bevorzugt im Bereich von 40.0 - 60.0 Gew.-% und besonders bevorzugt im Bereich von 42.0 bis 57.0 Gew.-% oder 45.0 - 55.0 Gew.-%, jeweils bezogen auf die Summe der Komponenten (A) bis (E).

Bevorzugt ist die Formmasse frei von Schlagzähmodifikator, d.h. (E) enthält keinen Schlagzähmodifikator.

**Komponente (A):** Die Komponente (A) setzt sich zusammen aus wenigstens einem Polyamid, bevorzugt wenigstens einem teilkristallinen, aliphatischen oder teilaromatischen Polyamid, oder besteht aus einer Mischung von Polyamiden, und besonders bevorzugt aus Mischungen aus wenigstens einem teilkristallinen Polyamid und wenigstens einem amorphen oder mikrokristallinen Polyamid.

Bevorzugt enthält die Polyamidformmasse von 34.0-59.8 Gew.-% und insbesondere bevorzugt 38.2-57.8 oder 41.5-54.7 Gew.-% des mindestens einen Polyamids (A), jeweils bezogen auf die Summe der Komponenten (A) bis (E).

Die hier verwendeten Schreibweisen und Abkürzungen für Polyamide und deren Monomere sind in der ISO-Norm ISO 16396-1:2015 festgelegt. So werden unter anderem folgende Abkürzungen für Diamine verwendet MXD für m-Xylylendiamin, MPMD für 2-Methyl-1,5-pentandiamin, MOD für 2-Methyl-1,8-octandiamin, MACM für Bis(4-amino-3-methyl-cyclohexyl)methan, PACM für Bis(4-amino-cyclohexyl)methan, TMDC für Bis(4-amino-3,5-dimethyl-cyclohexyl)methan, Bac für 1,3-Bis(aminomethyl)-cyclohexan, ND für 2,2,4-Trimethylhexamethylendiamin und IND für 2,4,4-Trimethylhexamethylendiamin.

Die vorliegende Erfindung umfasst Polyamide sowohl mit ausgeglichenem Endgruppenverhältnis der Carboxyl- und Aminogruppen als auch Polyamide mit einem unausgeglichenem Endgruppenverhältnis der Carboxyl- und Aminogruppen, d.h. bei denen entweder die Aminoendgruppen oder die Carboxylendgruppen im Überschuss vorliegen. Um die Polyamide mit einer bestimmten Endgruppenkonfiguration zu versehen, wird bei der Herstellung z.B. bevorzugt ein Überschuss an Diaminen oder Dicarbonsäuren verwendet, insbesondere liegt das molare Verhältnis von Diaminen zu Dicarbonsäuren im Bereich von 0.90 bis 1.10, weiter bevorzugt von 0.94 bis 1.06, ganz besonders bevorzugt im Bereich von 0.97 bis 1.03. Weiterhin werden zur Einstellung der Endgruppen der Polyamide bevorzugt monofunktionelle Zusätze an Aminen und Monocarbonsäuren verwendet.

Die Mengenangaben bezüglich der Monomere sind dabei so zu verstehen, dass sich ein entsprechendes Molverhältnis dieser bei der Polykondensation eingesetzten Monomere auch in den derart durch Polykondensation hergestellten Polyamiden wiederfindet. Wird ein Lactam oder eine Aminocarbonsäure eingesetzt, liegt kein Überschuss der einen Komponente vor, sondern es wird gezielt ein Amin oder eine Carbonsäure zu den Ausgangsstoffen hinzugegeben um das Endgruppenverhältnis einzustellen.

In einer bevorzugten Ausführungsform ist das mindestens eine Polyamid (A) ausgewählt aus der Gruppe bestehend aus teilkristallinen und amorphen Polyamiden oder Mischungen hiervon.

Bevorzugt ist das mindestens eine Polyamid (A) ein teilkristallines Polyamid oder eine Mischung von teilkristallinen Polyamiden. Ebenso wird bevorzugt die Komponente (A) als Mischung aus teilkristallinen und amorphen Polyamiden auszubilden. Mischungen mindestens zweier amorpher Polyamide eignen sich ebenso als Komponente (A).

Hier erwähnte teilkristalline Polyamide weisen im Gegensatz zu amorphen Polyamiden einen ausgeprägten Schmelzpunkt (oder Schmelztemperatur) auf, der z.B. über die Schmelzwärme mittels dynamischer Differenz-Kalorimetrie (engl. Differential Scanning Calorimetry, DSC) bestimmt werden kann. Teilkristalline Kunststoffe können z.B. einen kristallinen Anteil von 10 bis 80% aufweisen und sowohl eine Glasübergangstemperatur, unterhalb derer die amorphe Phase einfriert, als auch eine Schmelztemperatur, bei der sich die kristalline Phase auflöst, aufweisen. Bevorzugt liegt der Schmelzpunkt der teilkristallinen Polyamide im Bereich von 160 bis 330 °C, weiter bevorzugt im Bereich von 170 bis 300 °C und insbesondere im Bereich von 175 bis 280°C, jeweils bestimmt gemäss ISO 11357-3:2013 bei einer Aufheizrate von 20 K/min. Die teilkristallinen Polyamide weisen bevorzugt eine Schmelzenthalpie bestimmt gemäss ISO 11357-3:2013 von > 30 J/g auf.

Hier erwähnte amorphe Polyamide weisen hingegen keinen bestimmbaren Schmelzpunkt auf und verfügen lediglich über eine Glasübergangstemperatur. Während teilkristalline Polyamide opak sind, unterscheiden sich die amorphen Polyamide hiervon durch ihre Transparenz. Die amorphen Polyamide zeigen in der dynamischen Differenz-Kalorimetrie (engl. Differential Scanning Calorimetry, DSC) nach ISO 11357-3:2013 bei einer Aufheizrate von 20 K/min bevorzugt eine Schmelzwärme von weniger als 5 J/g. Amorphe Polyamide besitzen aufgrund ihrer Amorphizität keinen Schmelzpunkt.

Als Bindeglied zwischen den teilkristallinen und amorphen Polyamiden können die hier erwähnten mikrokristallinen Polyamide angesehen werden. Mikrokristalline Polyamide sind teilkristalline Polyamide und besitzen daher einen Schmelzpunkt. Sie haben jedoch eine Morphologie, bei der die Kristallite eine so kleine Dimension haben, dass eine daraus hergestellte Platte mit einer Dicke von 2 mm noch transparent ist, d.h. ihre Lichttransmission mindestens 75 % beträgt, gemessen nach ASTM D 1003:2013. Die mikrokristallinen Polyamide zeigen in der dynamischen Differenz-Kalorimetrie (engl. Differential Scanning Calorimetry, DSC) nach ISO 11357-3:2013 bei einer Aufheizrate von 20 K/min bevorzugt eine Schmelzwärme von 5 bis 30 J/g. Werden hier Polyamide als mikrokristallin bezeichnet, dann sind diese zwar grundsätzlich teilkristallin, verfügen aber über die oben angegebene Schmelzwärme.

Vorzugsweise beträgt die Glasübergangstemperatur des amorphen oder mikrokristallinen Polyamids 40 bis 220 °C, besonders bevorzugt 60 bis 200 °C, ganz besonders bevorzugt 100 bis 170 °C, gemessen nach ISO 11357-2:2013 bei einer Aufheizrate von 20 K/min. Für die Zwecke bevorzugter Ausführungsformen der vorliegenden Erfindung werden nachfolgend bevorzugte teilkristalline Polyamide einerseits, sowie zusammengefasst bevorzugte amorphe und mikrokristalline Polyamide betrachtet.

Beispielhafte und besonders bevorzugte **teilkristalline** Polyamide (**A1**: aliphatisch, **A2**: teilaromatisch) sind hierbei ausgewählt aus der Gruppe bestehend aus PA 6, PA 46, PA 49, PA 410, PA 411, PA 412, PA 413, PA 414, PA 415, PA 416, PA 418, PA 436, PA 56, PA 510, PA 66, PA 69, PA 610, PA 611, PA 612, PA 613, PA 614, PA 615, PA 616, PA 617, PA 618, PA 1010, PA 1011, PA 1012, PA 1013, PA 1014, PA 1015, PA 1016, PA 66/6, PA 6/66/610, PA 6/66/12, PA 6/12, PA 11, PA 12, PA 912, PA 1212, PA MXD6, PA MXD9, PA MXD10, PA MXD11, PA MXD12, PA MXD13, PA MXD14, PA MXD15, PA MXD16, PA MXD17, PA MXD18, PA MXD36, deren Copolyamide oder deren Gemische, Blends oder Legierungen, Polyamiden mit einer 4T-Wiederholungseinheit, Polyamiden mit einer 5T-Wiederholungseinheit, Polyamiden mit einer 6T-Wiederholungseinheit, Polyamiden mit einer 8T-Wiederholungseinheit, Polyamiden mit einer 9T-Wiederholungseinheit, Polyamiden mit einer 10T-Wiederholungseinheit, PA 4T/6T, PA 4T/8T, PA 6T/8T, PA 4T/MPMDT, PA 4T/4I, PA 5T/5I, PA 6T/6I, PA 9T, PA 9T/MODT, PA 9T/9I, PA 10T, PA 10T/6T, PA 10T/610, PA 10T/612, PA 10T/11, PA 10T/12, PA 10T/6T/10I/6I, PA 12T, PA MPMDT/6T, PA 6T/6I (> 50 mol-% 6T), PA 10T/10I, PA 12T/12I, PA 4T/6T/8T, PA 4T/6T/10T, PA 4T/8T/10T, PA6T/8T/10T, PA 4T/6T/MPMDT, PA 6T/6, PA 6T/66, PA 4T/66, PA 5T/66, PA 6T/6I/6, PA 66/6I/6T, PA 10T/6T/1012/612, PA 6T/BacT/Bac6/66, 6T/610/BacT/Bac10, PA 6T/612/BacT/Bac12, PA 6T/BacT/6I/BacI, Polyetheramiden, Polyetheresteramiden, Polyesteramiden und deren Mischungen oder Copolymeren.

Als Copolyamid im voranstehenden Sinne wird dabei ein Polyamid verstanden, das mehrere der genannten Monomereinheiten aufweist.

Die relative Viskosität der teilkristallinen Polyamide (A1) und (A2) beträgt vorzugsweise 1,40 bis 2,70, bevorzugt 1, 50 bis 2,40, besonders bevorzugt 1,60 bis 2,20, gemessen an einer Lösung von 0,5 g Polyamid in 100 ml-Kresol bei 20 °C gemäss ISO 307:2013.

Bei **amorphen bzw. mikrokristallinen** Polyamiden (**A3**) ist es bevorzugt, wenn diese ausgewählt sind aus der Gruppe bestehend aus PA 6I, PA 6I/6T (> 50 mol-% 6I), PA 6I/6T/6N, PA MXDI/6I, PA MXDI/MXDT/6I/6T, PA MXDI/12I, PA MXDI, PA MXDI/MXD6, PA MACM10, PA MACM12, PA MACM14, PA MACM18, PA NDT/INDT, PA TMDC10, PA TMDC12, PA TMDC14, PA TMDC18, PA PACM12, PA PACM14, PA PACM18, PA PACM10/11, PA PACM10/12, PA PACM12/612, PA PACM12/PACM14/612/614, PA MACMI/12, PA MACMT/12, PA MACMI/MACM12, PA MACMI/MACMN, PA MACMT/MACM12, PA MACMT/MACMN, PA MACM36, PA TMDC36, PA MACMI/MACM36, PA 6I/MACMI/12, PA MACMT/MACM36, PA MACMI/ MACMT/12, PA 6I/6T/MACMI/MACMT, PA 6I/6T/MACMI/ MACMT/12, PA MACM6/11, PA MACM6/12, PA MACM10/11, PA MACM10/12, PA MACM10/1010, PA MACM12/1012, PA MACM12/1212, PA MACM14/1014, PA MACM14/1214, PA MACM18/1018, PA 6I/6T/MACMI/MACMT/MACM12/612, PA 6I/6T/MACMI/MACMT/MACM12, PA MACMI/MACMT/MACM12/12, PA MACMI/MACMT/MACM12, PA 6I/6T/MACMI/MACMT/12, PA 6I/6T/6N/ MACMI/MACMT/MACMN, PA TMDC12/TMDCT/TMDC36, PA TMDC12/TMDCI, PA TMDC12/TMDCI/TMDC36 und PA TMDC12/TMDCT und Mischungen oder Copolymeren hiervon, wobei MACM vollständig, bevorzugt bis zu 50 mol-% des MACM, insbesondere bis zu maximal 35 mol-% des MACM durch PACM und/oder TMDC ersetzt sein kann, und/oder das Laurinlactam ganz oder teilweise durch Caprolactam ersetzt sein kann.

Die zuvor genannten Systeme PA 6T/6I (A2, teilkristallin) und PA 6I/6T (A3, amorph) unterscheiden sich dahingehend, dass der Anteil an 6T-Wiederholungseinheiten im erstgenannten Polyamid grösser als der Anteil der 6I-Wiederholungseinheiten ist, während es im letztgenannten Polyamid umgekehrt ist.

Insbesondere bevorzugt sind die Polyamide 66, 610, 612, 10T/6T, 66/6I/6T, 6T/66/BacT/Bac6, 6I/6T und sowie MACMX und PACMX mit X=10-16 sowie die Polyamide 11, 12. Ganz besonders bevorzugt sind PA 66, PA 66/6I/6T, PA 6T/66/BacT/Bac6, PA 6I/6T/MACMI/MACMT/ MACM12/612 und PA 10T/6T.

Die relative Viskosität der amorphen oder mikrokristallinen Polyamide A3 beträgt vorzugsweise 1.35 bis 2.20, bevorzugt 1.40 bis 2.10, besonders bevorzugt 1.45 bis 2.00, ganz besonders bevorzugt 1.50 bis 1.90, gemessen an einer Lösung von 0.5 g Polyamid in 100 ml-Kresol bei 20 °C gemäss ISO 307:2013.

Die Komponente (A) kann auch **Mischungen** von teilkristallinen Polyamiden (A1) und/oder (A2) und amorphen und/oder mikrokristallinen Polyamiden (A3) umfassen. Bevorzugt beträgt der Anteil der teilkristallinen Polyamide in der Komponente (A) dabei 30.0 bis 98.0 Gew.-%, weiter bevorzugt im Bereich von 40.0 bis 95.0 Gew.-% und besonders bevorzugt im Bereich von 50.0 bis 90.0 Gew.-%, jeweils bezogen auf die Gesamtheit der Komponente (A).

Diese Mischungen aus teilkristallinen Polyamiden (A1) und/oder (A2) mit amorphen oder mikrokristallinen Polyamiden (A3) werden bevorzugt ausgewählt aus der Gruppe bestehend aus Mischungen von PA 66 mit PA 6I/6T, von PA66 mit PA 6T/66/BacT/Bac6, von PA66 mit PA 6I/6T/MACMI/MACMT/MACM12/612, von PA 66/6I/6T mit PA 6I/6T, von PA 66/6I/6T mit PA 6T/66/BacT/Bac6, von PA12 mit PA MACM12, von PA12 mit PA PACM12, und von PA66 mit PA 6T/66/BacT/Bac6 und mit PA 6I/6T/MACMI/- MACMT/MACM12/612.

In einer weiteren besonders bevorzugten Ausführungsform der erfindungsgemässen Polyamidformmasse handelt es sich bei der Komponenten (A) um die Mischung aus mindestens einem teilkristallinen, aliphatischen Polyamid (A1) und mindestens einem teilkristallinen, teilaromatischen Polyamid (A2) auf Basis der Diamine 1,6-Hexandiamin und Bis(aminomethyl)-cyclohexan, insbesondere 1,3-Bis(aminomethyl)-cyclohexan, sowie der Dicarbonsäuren Terephthalsäure, Isophthalsäure und/oder mehrerer aliphatischer Dicarbonsäuren mit 6 bis 18 C-Atomen. Besonders bevorzugte aliphatische Polyamide (A1) sind PA66, PA610 und PA612, besonders bevorzugte teilaromatische Polyamide (A2) sind 6T/66/BacT/Bac6, 6T/610/BacT/Bac10, 6T/612/BacT/Bac12 und 6T/BacT/6I/BacI. In einer weiteren besonders bevorzugten Ausführungsform der erfindungsgemässen Polyamidformmasse handelt es sich bei der Komponenten (A) um teilkristalline Polyamide (A1) oder (A2) oder deren Mischungen. Insbesondere werden die Polyamide PA 66, PA 610, PA 612, PA 10T/6T, PA 66/6I/6T, PA 6T/66/BacT/Bac6, PA 6T/610/BacT/Bac10, PA 6T/612/BacT/Bac12, 6T/BacT/6I/BacI mit einer relativen Viskosität im Bereich von 1,60 bis 2,30 sowie deren Mischungen bevorzugt.

In einer weiteren besonders bevorzugten Ausführungsform der erfindungsgemässen Polyamidformmasse handelt es sich bei der Komponenten (A) um die Mischung aus teilkristallinen Polyamiden (**A1**) und/oder (**A2**) mit amorphen oder mikrokristallinen Polyamiden (A3). Hierbei sind insbesondere als teilkristallinen Polyamide (**A1**) PA 66, PA 610, PA 612, PA 616, PA12 und als Polyamide (**A2**) PA 10T/6T und PA 66/6I/6T mit einer relativen Viskosität im Bereich von 1,60 bis 2,30 sowie als amorphe oder mikrokristalline Polyamide (**A3**) PA 6I/6T, PA 6I/6T/MACMI/MACMT/MACM12/612, PA MACM12 und PA PACM12 bevorzugt.

Erfindungsgemäss sind daher als Polyamide der Komponente (A) insbesondere folgende Polyamid-Mischungen bevorzugt:
Mischung (i):
   (A1) 50 - 90 Gew.-% teilkristallines, aliphatisches Polyamid 66
   (A3) 10 - 50 Gew.-% amorphes, teilaromatisches Polyamid 6I/6T mit 55 bis 85 Mol-% Hexamethylenisophthalamid-Einheiten und 15 bis 45 Mol-% Hexamethylenterephthalamid-Einheiten,
   wobei die Anteile von (A1) und (A3) 100 Gew.-% der Polyamid-Mischung (A) ausmachen.
Mischung (ii):
   (A1) 50 - 90 Gew.-% teilkristallines, aliphatisches Polyamid 66
   (A2) 10 - 50 Gew.-% teilkristallines, teilaromatisches Polyamid 6T/66/BacT/Bac6, 6T/6I/BacT/BacI oder 6T/66/6I/BacT/Bac6/BacI, wobei die Diaminkomponente aus 65 bis 85 Mol-Anteilen 1,6-Hexandiamin und 15 bis 35 Mol-Anteilen Bis(aminomethyl)-cyclohexan, insbesondere 1,3-Bis(aminomethyl)-cyclohexan, ausgewählt ist, sowie die Dicarbonsäurekomponente aus 64 bis 100 Mol-Anteilen Terephthalsäure, 0 bis 18 Mol-Anteilen Isophthalsäure sowie 0 bis 18 Mol-Anteilen einer oder mehrerer aliphatischer Dicarbonsäuren mit 6 bis 18 C-Atomen besteht, und wobei die jeweilige Summe von Diamin- bzw. Dicarbonsäurekomponente 100 Mol-Anteile beträgt,
   wobei die Anteile von (A1) und (A2) 100 Gew.-% der Polyamid-Mischung (A) ausmachen.
Mischung (iii):
   (A2) 50 - 90 Gew.-% teilkristallines, teilaromatisches Polyamid 10T/6T
   (A3) 10 - 50 Gew.-% amorphes, teilaromatisches Polyamid 6I/6T mit 55 bis 85 Mol-% Hexamethylenisophthalamid-Einheiten und 15 bis 45 Mol-% Hexamethylenterephthalamid-Einheiten,
   wobei die Anteile von (A2) und (A3) 100 Gew.-% der Polyamid-Mischung (A) ausmachen.
Mischung (iiii):
   (A1) 50 - 90 Gew.-% teilkristallines, aliphatisches Polyamid 66
   (A2) 8 - 30 Gew.-% teilkristallines, teilaromatisches Polyamid PA6T/BacT/66/Bac6, 6T/BacT/6I/BacI oder 6T/BacT/6I/BacI/66/Bac6, wobei die Diaminkomponente aus 65 bis 85 Mol-Anteilen 1,6-Hexandiamin und 15 bis 35 Mol-Anteilen Bis(aminomethyl)-cyclohexan, insbesondere 1,3-Bis(aminomethyl)-cyclohexan, ausgewählt ist, sowie die Dicarbonsäurekomponente aus 64 bis 100 Mol-Anteilen Terephthalsäure, 0 bis 18 Mol-Anteilen Isophthalsäure sowie 0 bis 18 Mol-Anteilen einer oder mehrerer aliphatischer Dicarbonsäuren mit 6 bis 18 C-Atomen besteht, und wobei die jeweilige Summe von Diamin- bzw. Dicarbonsäurekomponente 100 Mol-Anteile beträgt,
   (A3) 2 - 20 Gew.-% amorphes Polyamid 6I/6T/612/MACMI/MACMT/MACM12, wobei die Zusammensetzung bevorzugt je 18-30 mol-% 6I- und 6T-Einheiten, 12-26 mol-% 612-Einheiten, sowie je 6-16 mol-% MACM12-, MACMI- und MACMT-Einheiten umfasst, wobei die Summe aller PA-Einheiten 100 mol-% ergeben,
wobei die Anteile von (A1), (A2) und (A3) 100 Gew.-% der Polyamid-Mischung (A) ausmachen.

Die Polyamidformmasse enthält zwingend in Form von **Komponente (B)** einen faserförmigen Verstärkungsstoff in Form von Glasfasern in einem Anteil von wenigstens 15.0 Gewichtsprozent und höchstens 40.0 Gewichtsprozent.

Gemäss einer bevorzugten Ausführungsform ist die Polyamidformmasse dadurch gekennzeichnet, dass die Komponente (B) in einem Anteil, bezogen auf die Summe der Komponenten (A)-(E), im Bereich von 17.0-35.0 Gew.-%, vorzugsweise im Bereich von 18.0-32.0 Gew.-%, oder 20.0-30.0 Gew.-% vorliegt.

Die Glasfasern (B) können dabei einen kreisförmigen Querschnitt, insbesondere vorzugsweise mit einem Durchmesser im Bereich von 5-20 µm oder im Bereich von 5-13 µm oder 6-10 µm, aufweisen, oder einen nicht-kreisförmigen Querschnitt, wobei das Abmessungsverhältnis von der Hauptquerschnittsachse zur senkrecht darauf stehenden Nebenquerschnittsachse bevorzugtermassen grösser als 2.5 ist, insbesondere bevorzugt im Bereich von 2.5-6 oder 3-5.

Die Glasfasern (B) können z.B. in Form von sogenannten Kurzfasern (z.B. Schnittglas mit einer Länge von 0.2-20 mm) oder Endlosfasern (Rovings) verwendet werden. Die Glasfasern (B) können unterschiedliche Querschnittsflächen aufweisen, wobei Glasfasern mit kreisförmigem Querschnitt (runde Fasern) und mit nicht-kreisförmigem Querschnitt (flache Fasern) bevorzugt sind.

Glasfasern mit kreisförmigem Querschnitt, also runde Glasfasern, haben bevorzugtermassen einen Durchmesser im Bereich von 5-20 µm, bevorzugt im Bereich von 5-13 µm und besonders bevorzugt im Bereich von 6-10 µm. Sie werden bevorzugt als Kurzglasfaser (Schnittglas mit einer Länge von 0.2 bis 20 mm, bevorzugt 2-12 mm) eingesetzt.

Bei den flachen Glasfasern, also Glasfasern mit nicht-kreisförmiger Querschnittsfläche, werden bevorzugtermassen solche mit einem Abmessungsverhältnis von der Hauptquerschnittsachse zur senkrecht darauf stehenden Nebenquerschnittsachse von mehr als 2.5, bevorzugt im Bereich von 2.5 bis 6, insbesondere im Bereich von 3 bis 5 eingesetzt. Diese sogenannten flachen Glasfasern weisen eine ovale, elliptische, mit Einschnürung(en) versehene elliptische (sogenannte Kokon- oder cocoon-Faser), polygonale, rechteckige oder nahezu rechteckige Querschnittsfläche auf. Ein weiteres bevorzugtes kennzeichnendes Merkmal der eingesetzten flachen Glasfasern besteht darin, dass die Länge der Hauptquerschnittsachse bevorzugt im Bereich von 6 bis 40 µm, insbesondere im Bereich von 15 bis 30 µm und die Länge der Nebenquerschnittsachse im Bereich von 3 bis 20 µm, insbesondere im Bereich von 4 bis 10 µm liegt. Dabei weisen die flachen Glasfasern eine möglichst hohe Packungsdichte auf, d.h. die Glasquerschnittsfläche füllt ein gedachtes, den Glasfaserquerschnitt möglichst exakt umgebendes Rechteck zu mindestens 70%, bevorzugt mindestens 80% und insbesondere bevorzugt zu mindestens 85% aus.

Zur Verstärkung der erfindungsgemässen Formmassen können auch Mischungen von Glasfasern mit kreisförmigem und nicht-kreisförmigem Querschnitt verwendet werden, wobei der Anteil an flachen Glasfasern bevorzugtermassen überwiegt, d.h. mehr als 50 Gew.-% der Gesamtmasse der Fasern ausmacht.

Vorzugsweise ist die Komponente (B) ausgewählt aus der Gruppe bestehend aus: E-Glasfasern (diese bestehen gemäss ASTM D578-00 aus 52-62% Siliciumdioxid, 12-16% Aluminiumoxid, 16-25% Calciumoxid, 0-10% Borax, 0-5% Magnesiumoxid, 0-2% Alkalioxide, 0-1.5% Titandioxid und 0-0.3% Eisenoxid; bevorzugt haben sie eine Dichte von 2.58±0.04 g/cm3, einen Zug-E-Modul von 70-75 GPa, eine Zugfestigkeit von 3000-3500 MPa und eine Reissdehnung von 4.5-4.8%), A-Glasfasern (63-72% Siliciumdioxid, 6-10% Calciumoxid, 14-16% Natrium- und Kaliumoxid, 0-6% Aluminiumoxid, 0-6% Boroxid, 0-4% Magnesiumoxid), C-Glasfasern (64-68% Siliciumdioxid, 11-15% Calciumoxid, 7-10% Natrium- und Kaliumoxid, 3-5% Aluminiumoxid, 4-6% Boroxid, 2-4% Magnesiumoxid), D-Glasfasern (72-75% Siliciumdioxid, 0-1% Calciumoxid, 0-4% Natrium- und Kaliumoxid, 0-1% Aluminiumoxid, 21-24% Boroxid), Basaltfasern (Mineralfaser mit der ungefähren Zusammensetzung: 52% SiO2, 17% Al2O3, 9% CaO, 5% MgO, 5% Na2O, 5% Eisenoxid sowie weiteren Metalloxiden), AR-Glasfasern (55-75% Siliciumdioxid, 1-10% Calciumoxid, 11-21% Natrium- und Kaliumoxid, 0-5% Aluminiumoxid, 0-8% Boroxid, 0-12%Titandioxid, 1-18% Zirkonoxid, 0-5% Eisenoxid) sowie Mischungen davon.

Eine bevorzugte Ausführungsform der Komponente (B) sind hochfeste Glasfasern beruhend auf dem ternären System Siliciumdioxid-Aluminiumoxid-Magnesiumoxid oder auf dem quaternären System Siliciumdioxid-Aluminiumoxid-Magnesiumoxid-Calciumoxid, wobei die Summe der Gehalte von Siliciumdioxid. Aluminiumoxid und Magnesiumoxid wenigstens 78 Gew.-%, bevorzugt wenigstens 87% und besonders bevorzugt wenigstens 92% bezogen auf die gesamte Glaszusammensetzung beträgt. Konkret wird bevorzugt eine Zusammensetzung von 58-70 Gew.-% Siliciumdioxid (SiO2), 15-30 Gew.-% Aluminiumoxid (Al2O3), 5-15 Gew.-% Magnesiumoxid (MgO), 0-10 Gew.-% Calciumoxid (CaO) und 0-2 Gew.-% weitere Oxide, wie z.B. Zirkoniumdioxid (Zr02), Boroxid (B2O3), Titandioxid (TiO2) oder Lithiumoxid (Li2O) eingesetzt. In einer weiteren Ausführungsform besitzt die hochfeste Glasfaser eine Zusammensetzung von 60-67 Gew.-% Siliciumdioxid (SiO2), 20-28 Gew.-% Aluminiumoxid (Al2O3), 7-12 Gew.-% Magnesiumoxid (MgO), 0-9 Gew.-% Calciumoxid (CaO) sowie 0-1.5 Gew.-% weitere Oxide, wie z.B. Zirkoniumdioxid (ZrO2), Boroxid (B2O3), Titandioxid (TiO2), Lithiumoxid (Li2O).

Insbesondere ist bevorzugt, wenn die hochfeste Glasfaser die nachfolgende Zusammensetzung aufweist: 62-66 Gew.-% Siliciumdioxid (SiO2), 22-27 Gew.-% Aluminiumoxid (Al2O3), 8-12 Gew.-% Magnesiumoxid (MgO), 0- 5Gew.-% Calciumoxid (CaO), 0-1 Gew.-% weitere Oxide, wie z.B. Zirkoniumdioxid (ZrO2), Boroxid (B2O3), Titandioxid (TiO2), Lithiumoxid (Li2O).

Die hochfeste Glasfaser besitzt eine Zugfestigkeit von grösser oder gleich 3700 MPa, vorzugsweise von wenigstens 3800 oder 4000 MPa, eine Reissdehnung von mindestens 4.8%, vorzugsweise von wenigstens 4.9 oder 5.0 %, und einen Zug-E-Modul von grösser 75 GPa, vorzugsweise von mehr als 78 oder 80 GPa, wobei diese Glaseigenschaften an Einzelfasern (pristine single filament) mit einem Durchmesser von 10 µm und eine Länge von 12.7 mm bei einer Temperatur von 23°C und einer relativen Luftfeuchte von 50% zu bestimmen sind. Konkrete Beispiele für diese hochfesten Glasfasern der Komponente (B1) sind S-Glasfasern von Owens Corning mit 995-Schlichte, T-Glasfasern von Nittobo, HiPertex von 3B, HS4-Glasfasern von Sinoma Jinjing Fiberglass, R-Glasfasern von Vetrotex sowie S-1- und S-2-Glasfasern von AGY.

Die z.B. als Roving eingesetzten Glasfasern (Endlosfasern) weisen bevorzugtermassen einen Durchmesser (bei runden Glasfasern) bzw. eine Nebenquerschnittsachse (bei flachen Glasfasern) von 6 bis 20 µm, bevorzugt von 12 bis 18 µm auf, wobei der Querschnitt der Glasfasern rund, oval, elliptisch, elliptisch mit Einschnürung(en) versehen, polygonal, rechteckig oder nahezu rechteckig sein kann. Besonders bevorzugt werden sogenannte flache Glasfasern mit einem Verhältnis der Querschnittsachsen, d.h. ein Verhältnis von Haupt- zur Nebenquerschnittsachse von 2.5 bis 5. Die Endlosfasern können aus den oben beschriebenen Glassorten hergestellt sein, wobei Endlosfasern auf Basis von E-Glas und den hochfesten Glassorten bevorzugt sind. Diese Endlosfasern werden in die erfindungsgemässen Polyamidformmassen durch bekannte Verfahren zur Herstellung von langfaserverstärktem Stäbchengranulat eingearbeitet, insbesondere durch Pultrusionsverfahren, bei denen der endlose Faserstrang (Roving) mit der Polymerschmelze vollständig durchtränkt und anschliessend abgekühlt und geschnitten wird. Das auf diese Art und Weise erhaltene langfaserverstärkte Stäbchengranulat, das bevorzugt eine Granulatlänge von 3 bis 25 mm, insbesondere von 4 bis 12 mm aufweist, kann mit den üblichen Verarbeitungsverfahren (wie z. B. Spritzgiessen, Pressen) zu Formteilen weiterverarbeitet werden.

Bevorzugt werden als Komponente (B) Glasfasern aus E-Glas, mit nicht-kreisförmigem Querschnitt (flache Fasern) und mit einem Achsenverhältnis der Hauptquerschnittsachse zur Nebenquerschnittsachse von wenigstens 2.5, und/oder hochfeste Glasfasern mit kreisförmigem oder nicht-kreisförmigem Querschnitt und einer Glaszusammensetzung, beruhend im Wesentlichen auf den Komponenten Siliciumdioxid, Aluminiumoxid und Magnesiumoxid, wobei der Anteil an Magnesiumoxid (MgO) 5-15 Gew.-% und der Anteil an Calciumoxid 0 - 10 Gew.-% beträgt.

Die Glasfasern der Komponente (B) weisen bevorzugt als flache E-Glasfasern eine Dichte von 2.54 - 2.62 g/cm3, einen Zug-E-Modul von 70 - 75 GPa, eine Zugfestigkeit von 3000 - 3500 MPa und eine Reissdehnung von 4.5 - 4.8% auf, wobei die mechanischen Eigenschaften an Einzelfasern mit einem Durchmesser von 10 µm und eine Länge von 12.7 mm bei 23°C und einer relativen Luftfeuchte von 50% bestimmt wurden.

Besonders bevorzugt werden als Komponente (B) Glasfasern aus E-Glas, mit kreisförmigem Querschnitt (runde Fasern) und einem Durchmesser im Bereich von 6 bis 10 µm,

Die erfindungsgemässen Glasfasern können mit einer für Thermoplaste, insbesondere für Polyamid geeigneten Schlichte, enthaltend einen Haftvermittler auf Basis einer Amino- oder Epoxysilanverbindung, versehen sein.

Bevorzugt enthält die Polyamidformmasse von 16.0 bis 33.0 Gew.-%, weiter bevorzugt 18.0 bis 32.0 Gew.-%, weiter bevorzugt 20.0 bis 30.0 Gew.-% Glas-Flakes (**Komponente (C)**), jeweils bezogen auf die Summe der Komponenten (A) bis (E).

Die Teilchendicke der Glas-Flakes der Komponente (C) liegt vorzugsweise im Bereich 0.4 bis 1.7 µm, weiter bevorzugt im Bereich von 0.5 bis 1.6 µm, insbesondere bevorzugt im Bereich 0.5 bis 1.5 µm. Bevorzugt ist die Teilchendicke der Glas-Flakes zu verstehen als mittlere Teilchendicke. Dabei ergibt sich die mittlere Teilchendicke als arithmetischer Mittelwert aus der Dickenbestimmung an mindestens 100 einzelnen Glasschuppen, die mittels Rasterelektronenmikroskopie durchgeführt wird. Im Hinblick auf die Schwankungsbreite der Teilchendicke wird weiterhin bevorzugt, wenn in einem Bereich für die Teilchendicke, der sich von der halben mittleren Teilchendicke (0.5 x mittlere Teilchendicke) bis zur eineinhalben mittleren Teilchendicke (1.5 x mittlere Teilchendicke) erstreckt, wenigstens 50 Gew.-%, insbesondere wenigstens 70 Gew.-% der Glas-Flakes enthalten sind. Somit bevorzugt werden Glas-Flakes der Komponente (C), die eine mittlere Teilchendicke im Bereich von 0.3 bis 2.0 µm, weiter bevorzugt im Bereich 0.4 bis 1.7 µm, weiter bevorzugt im Bereich von 0.5 bis 1.6 µm und insbesondere bevorzugt im Bereich 0.5 bis 1.5 µm haben.

Glas-Flakes sind transparente, dünne, plättchenförmige Glasstücke von unregelmässiger Gestalt mit einer breiten Partikelgrössenverteilung und einem hohen Aspektverhältnis (Verhältnis von mittlerem Teilchendurchmesser zu Teilchendicke). Die Teilchendicke variiert innerhalb einer Glas-Flake-Type nur geringfügig. Die einzelnen Glasteilchen weisen eine übliche Teilchengrösse von 10 bis 2000 oder 10 bis 4000 µm bei einem mittleren Teilchendurchmesser (D50) von im Bereich 20 - 300, 30 - 300 oder 15 - 600 µm auf. Diese und die weiter oben beschriebenen Dimensionen sind bezogen auf das Ausgangsmaterial und/oder auf die Glas Flakes in der Formmasse zu verstehen. Herkömmliche Glas-Flakes, die hauptsächlich in Lacken oder Beschichtungen als Korrosionsschutz oder zur Verstärkung von Kunststoffen eingesetzt werden, besitzen dabei eine Dicke von 3 bis 7 µm. Hergestellt werden die Glas-Flakes beispielsweise durch das Zertrümmern von Glasblasen oder durch Zerteilen einer flüssigen Glasschmelze in einer Zentrifuge und anschliessendem Zerkleinern der bändchenartigen Glasstücke. Charakterisiert werden sie anhand ihrer Partikelgrössenverteilung, des mittleren Teilchendurchmessers und der Dicke der Glasteilchen. Zudem können die Glas-Flakes aus unterschiedlichen Glassorten hergestellt werden, so z.B. E-Glas, S-Glas, ECR-Glas und C-Glas. Ein typischer Vertreter der dicken Glas-Flakes ist beispielsweise das Microglas REF-160 A von NGF Europe, das folgende Partikelgrössenverteilung aufweist: 10% der Glasteilchen haben einen Durchmesser von 300 - 1700 µm, 65% haben einen Durchmesser im Bereich von 45 - 300 µm und 25% haben einen Teilchendurchmesser von kleiner 45 µm. Die Dicke beträgt dabei 5 µm. Als Glassorte wird E-Glas verwendet. Die Glas-Flakes können mit unterschiedlichen Schlichten zur Verbesserung der Anbindung an die polymere Matrix oberflächlich beschichtet werden, wie z.B. mit Aminosilanen oder Epoxysilanen. Die erfindungsgemäss eingesetzten Glas-Flakes weisen zwar vorzugsweise in etwa die oben genannten mittleren Teilchendurchmesser und Partikelgrössenverteilung auf, haben aber ein grösseres Aspektverhältnis und damit eine deutlich geringere Teilchendicke. Die erfindungsgemässen Glas-Flakes besitzen eine Dicke von lediglich 0.3 bis 2.0 µm. Diese sehr dünnen Glas-Flakes werden derzeit ausschliesslich in der Kosmetik und in Effekt-Pigment-Lacken für Automobile verwendet. Beispiele für solche sehr dünnen Glas-Flakes sind zum einen der Typ MEG160FY-M03 von Nippon Sheet Glass Co. (JP) aus E-Glas, mit einem mittleren Teilchendurchmesser (d50) von 160 µm, einer Dicke von 0.7 µm. und einer Partikelgrössenverteilung mit 20% der Glasteilchen im Bereich von 2000-1400 µm, mit 60% im Bereich von 150-1400 µm und mit 20% kleiner als 150 µm sowie einer Beschichtung aus 3-Aminopropyltriethoxysilan oder zum anderen der Glas-Flake-Typ GF100E-A von Glass Flake Ltd. aus E-Glas mit einem mittleren Teilchendurchmesser von 160 µm, einer Partikelgrössenverteiltung mit 80% der Glasteilchen im Bereich von 150 - 1700 µm und 20% kleiner als 150 µm, mit einer Teilchendicke von 1.0 bis 1.3 µm und einer Beschichtung aus 3-Aminopropyltriethoxysilan. Geeignet ist auch der Glas-Flake-Typ GF100MECR-A aus ECR-Glas der Firma Glass Flake Ltd. mit einem mittleren Teilchendurchmesser von 120 µm, einer Partikelgrössenverteiltung mit 10% der Glasteilchen im Bereich von 300 - 1000 µm, mit 65% im Bereich von 50 - 300 µm und 25% kleiner als 50 µm, mit einer Teilchendicke von 1.0 bis 1.3 µm und einer Beschichtung aus 3-Aminopropyltriethoxysilan.

Dabei wird bevorzugt, wenn die Glas-Flakes aus E-, S-, C- oder ECR-Glas bestehen, besonders bevorzugt werden Glas-Flakes aus E-Glas.

Die Glas-Flakes können unterschiedliche Partikelgrössen aufweisen, je nachdem, ob sie gemahlen, mikronisiert oder ungemahlen vorliegen. Bevorzugt werden mittlere Teilchendurchmesser (D50) von 20 bis 300 µm, besonders bevorzugt von 50 bis 200 µm und insbesondere bevorzugt von 80 bis 170 µm. Der angegebene mittlere Teilchendurchmesser der Glasflakes bezieht sich auf den eingesetzten Rohstoff (Komponente (C)) und/oder auf die fertige Formmasse und wurde mit Hilfe einer Laserbeugungs-Partikelgrössenanalyse bestimmt.

Bevorzugt besitzen die verwendeten Glas-Flakes eine Beschichtung auf Basis von Aminosilanen, Vinylsilanen, Epoxysilanen oder Acrylsilanen, wobei insbesondere eine Oberflächenbeschichtung mit Aminosilanen bevorzugt wird. Die Menge an Silan beträgt bevorzugt 0.1 bis 1.0 Gew.-%, besonders bevorzugt 0.3 bis 0.9 Gew.-% bezogen auf die Menge der Glas-Flakes.

Die Polyamidformmasse enthält in Form von **Komponente (D)** auch Hitzestabilisatoren, verschieden von den anderen Bestandteilen (B), (C) und (E), in einem Anteil von 0.1 bis 2.0 Gewichtsprozent. Bevorzugtermassen liegt die Komponente (D) in einem Anteil, bezogen auf die Summe der Komponenten (A)-(E), im Bereich 0.2-2.0 Gew.-%, insbesondere bevorzugt im Bereich von 0.2 - 1.8 oder 0.3-1.5 Gew.-%, vor.

Die Komponente (D) kann dabei gemäss einer bevorzugten Ausführungsform ausgewählt sein aus der folgenden Gruppe:
- Verbindungen des ein- oder zweiwertigen Kupfers, insbesondere Salze des ein- oder zweiwertigen Kupfers mit anorganischen oder organischen Säuren oder ein- oder zweiwertigen Phenolen, die Oxide des ein- oder zweiwertigen Kupfers, oder die Komplexverbindungen von Kupfersalzen mit Ammoniak, Aminen, Amiden, Lactamen, Cyaniden oder Phosphinen, bevorzugt Cu(I)- oder Cu(II)-Salze der Halogenwasserstoffsäuren, der Cyanwasserstoffsäuren oder die Kupfersalze der aliphatischen Carbonsäuren, wobei besonders bevorzugt die einwertigen Kupferverbindungen CuCl, CuBr, CuI, CuCN und Cu2O, sowie die zweiwertigen Kupferverbindungen CuCl2, CuSO4, CuO, Kupfer(II)acetat oder Kupfer(II)stearat sind, oder Mischungen dieser Verbindungen, wobei diese Kupfer Verbindungen als solche oder bevorzugtermassen in Form von Konzentraten eingesetzt werden. Dabei ist unter Konzentrat ein Polymer, vorzugsweise gleicher oder im wesentlichen gleicher chemischer Natur wie Komponente (A), zu verstehen, welches das Kupfersalz bzw. die Kupferverbindung in hoher Konzentration enthält. Insbesondere werden bevorzugtermassen die Kupferverbindungen in Kombination mit weiteren Metallhalogeniden, einschliesslich Alkalihalogeniden, wie Nal, KI, NaBr, KBr, eingesetzt, wobei das molare Verhältnis von Metallhalogenid zu Kupfer 0.5 bis 20, bevorzugt 1 bis 10 und besonders bevorzugt 2 bis 7 beträgt;

- Stabilisatoren auf Basis sekundärer aromatischer Amine;
- Stabilisatoren auf Basis sterisch gehinderter Phenole;
- Phosphiten und Phosphoniten, sowie
- Mischungen der vorstehend genannten Stabilisatoren.

Es handelt sich also bevorzugtermassen um Verbindungen des ein- oder zweiwertigen Kupfers, z.B. Salze des ein- oder zweiwertigen Kupfers mit anorganischen oder organischen Säuren oder ein- oder zweiwertigen Phenolen, die Oxide des ein- oder zweiwertigen Kupfers, oder die Komplexverbindungen von Kupfersalzen mit Ammoniak, Aminen, Amiden, Lactamen, Cyaniden oder Phosphinen, bevorzugt Cu(I)- oder Cu(II)-Salze der Halogenwasserstoffsäuren, der Cyanwasserstoffsäuren oder die Kupfersalze der aliphatischen Carbonsäuren. Besonders bevorzugt sind die einwertigen Kupferverbindungen CuCl, CuBr, CuI, CuCN und Cu2O, sowie die zweiwertigen Kupferverbindungen CuCl2, CuSO4, CuO, Kupfer(II)acetat oder Kupfer(II)stearat.

Die Kupferverbindung kann als solche oder in Form von Konzentraten eingesetzt werden. Unter Konzentrat ist dabei ein Polymer, vorzugsweise gleicher chemischer Natur wie Komponente (A), zu verstehen, welches das Kupfersalz in hoher Konzentration enthält. Vorteilhafterweise werden die Kupferverbindungen in Kombination mit weiteren Metallhalogeniden, insbesondere Alkalihalogeniden, wie Nal, KI, NaBr, KBr, eingesetzt, wobei das molare Verhältnis von Metallhalogenid zu Kupfer 0,5 bis 20, bevorzugt 1 bis 10 und besonders bevorzugt 2 bis 7 beträgt. Bevorzugt wird eine Kombination aus Cul und KI mit einer Gesamtkonzentration bezogen auf die Formmasse von 0.1 bis 0.7 Gew.-%, insbesondere von 0.2 bis 0.5 Gew.-% eingesetzt.

Ebenfalls möglich sind Stabilisatoren auf Basis sekundärer aromatischer Amine, wobei diese Stabilisatoren vorzugsweise in einer Menge von 0,2 bis 2, bevorzugt von 0,2 bis 1,5 Gew.-% vorliegen.

Weiterhin möglich sind Stabilisatoren auf Basis sterisch gehinderter Phenole, wobei diese Stabilisatoren vorzugsweise in einer Menge von 0,1 bis 1,5, bevorzugt von 0,2 bis 1.0 Gew.-% vorliegen. Auch möglich sind Phosphite und Phosphonite.

Gleichermassen möglich sind Mischungen der vorstehend genannten Hitzestabilisatoren. Besonders bevorzugte Beispiele für erfindungsgemäss einsetzbare Stabilisatoren auf Basis sekundärer aromatischer Amine sind Addukte aus Phenylendiamin mit Aceton (Naugard A), Addukte aus Phenylendiamin mit Linolen, Naugard 445, N,N'-Dinaphthyl-p-phenylendiamin, N-Phenyl-N'-cyclohexyl-p-phenylendiamin oder Mischungen von zwei oder mehreren davon.

Bevorzugte Beispiele für erfindungsgemäss einsetzbare Stabilisatoren auf Basis sterisch gehinderter Phenole sind N,N'-Hexamethylen-bis-3-(3,5-di-tert-butyl-4-hydroxyphenyl)-propionamid, Bis-(3,3-bis-(4'-hydroxy-3'-tert-butylphenyl)-butansäure)-glykolester, 2,1'-Thioethylbis-(3-(3,5-di.tert-butyl-4-hydroxyphenyl)-propionat, 4-4'-Butyliden-bis-(3-methyl-6-tert.-butylphenol), Triethylenglykol-3-(3-tert-butyl-4-hydroxy-5-methylphenyl)-propionat oder Mischungen von zweien oder mehreren dieser Stabilisatoren.

Bevorzugte Phosphite und Phosphonite sind Triphenylphosphit, Diphenylalkylphosphit, Phenyldialkylphosphit, Tris(nonylphenyl)phosphit, Trilaurylphosphit, Trioctadecylphosphit, Distearylphentaerythritoldiphosphit, Tris(2,4-di-tert-butylphenyl)phosphit, Diisodecylpentaerythritoldiphosphit, Bis(2,4-di-tert-butylphenyl)pentaerythritoldiphosphit, Bis(2,6-di-tert-butyl-4-methylphenyl)-pentaerythritoldiphosphit, Diisodecyloxypentaerythritoldiphosphit, Bis(2,4-di-tert-butyl-6-methylphenyl)pentaerythritoldiphosphit, Bis(2,4,6-tris-(tert-butylphenyl))pentaerythritol-diphosphit, Tristearylsorbitoltriphosphit, Tetrakis(2,4-di-tert-butylphenyl)-4,4'-biphenylendiphosphonit, 6-Isooctyloxy-2,4,8,10-tetra-tert-butyl-12H-dibenz-[d,g]-1,3,2-dioxaphosphocin, 6-Fluoro-2,4,8,10-tetra-tert-butyl- 12-methyl-dibenz[d,g]-1,3,2-dioxaphosphocin, Bis(2,4-di-tert- butyl-6-methylphenyl)methylphosphit und Bis(2,4-di-tert-butyl-6-methylphenyl)ethylphosphit. Insbesondere werden bevorzugt Tris[2-tert-butyl-4-thio(2'-methyl-4'-hydroxy-5'-tert-butyl)-phenyl-5-methyl]phenyl-phosphit und Tris(2,4-di-tert-butylphenyl)phosphit (Hostanox® PAR24: Handelsprodukt der Firma Clariant, Basel).

Eine bevorzugte Ausführungsform des Wärmestabilisators besteht in der Kombination von Irgatec NC 66 (erhältlich von BASF) und einer Kupferstabilisierung auf Basis von CuI und KI. Insbesondere bevorzugt wird eine Wärmestabilisierung ausschliesslich auf Basis von CuI und KI.

Neben dem Einsatz von organischen Hitzestabilisatoren und/oder von Kupfer oder Kupferverbindungen wird die Verwendung weiterer Übergangsmetalle oder weiterer Übergangsmetallverbindungen der Gruppe VB, VIB, VIIB und/oder VIIIB des Periodensystems bevorzugt ausgeschlossen.

Gemäss einer weiteren bevorzugten Ausführungsform sind die Hitzestabilisatoren der Komponente (D) ausgewählt aus der Gruppe der Phenol-basierten Hitzestabilisatoren, Phosphit-basierten Hitzestabilisatoren, Amin-basierten Hitzestabilisatoren, oder Mischungen oder Kombinationen davon, wobei insbesondere bevorzugt Komponente (D) ausgewählt ist aus der folgenden Gruppe: Triethylenglykol bis(3-tert-butyl-4-hydroxy-5-methylphenyl)propionat, Pentaerythritol Tetrakis(3-(3,5-di-tert-butyl-4-hydroxyphenyl)propionat), N,N'-Hexamethylen bis[3-(3,5-di-t-butyl-4 - hydroxyphenyl)propionamid], Tris (2,4-di-tert-butylphenyl) phosphit, Tris (2,4-di-tert-butylphenyl)phosphit, oder Mischungen davon.

Bevorzugte organische Stabilisatoren sind Phenol- und/oder Phosphit-Verbindungen, wie z.B. Irganox 245, Irganox 1010, Irganox 1098, Hostanox PAR 24 oder Irgafos 168. Besonders bevorzugt als Komponente (D) wird eine Mischung aus 10 Gew.-Teilen einer Mischung aus Irganox 1010 (CAS 6683-19-8, phenolisches Antioxidants) und Anox 20 (CAS 6683-19-8, phenolisches Antioxidants) im Verhältnis 7:3 sowie 2 Gew.-Teile Hostanox PAR24 (CAS: 31570-04-4, Tris(2,4-ditert-butylphenyl)phosphite), wobei die Konzentration in Bezug auf die Summe der Komponenten (A) bis (E) 0.3 bis 1.5 Gew.-% beträgt.

Die Polyamidformmasse enthält optional in Form von **Komponente (E)** auch weitere Hilfsstoffe und/oder Additive, verschieden von den anderen Bestandteilen (A)-(D), in einem Anteil von bevorzugt höchstens 4 Gewichtsprozent.

Gemäss einer bevorzugten Ausführungsform liegt die Komponente (E) in einem Anteil, bezogen auf die Summe der Komponenten (A)-(E), im Bereich 0-4.0 Gew.-%, weiter bevorzugt im Bereich von 0 - 3.0 Gew.-% und insbesondere bevorzugt im Bereich von 0-2.0 oder 0.1 - 2.0 Gew.-%, vor.

Bevorzugtermassen ist die Komponente (E) ausgewählt aus der folgenden Gruppe: Kristallisations-Beschleuniger oder -Verzögerer, Fliesshilfsmittel, Gleitmittel, Entformungsmittel, Pigmente, Farbstoff- und Markierungsstoffe, Verarbeitungshilfsmittel, Antistatika, Russ, Graphit, Kohlenstoffnanoröhrchen, Residuen aus Polymerisationsverfahren wie Katalysatoren, Salze und deren Derivate. Bevorzugtermassen ist die Komponente (E) frei von Polyamiden, insbesondere teilkristallinen, teilaromatischen, aliphatischen, mikrokristallinen oder amorphen Polyamiden und frei von Schlagzähmodifikator.

Wie bereits weiter oben erläutert, ist die vorgeschlagene Polyamidformmasse insbesondere dadurch gekennzeichnet, dass sie sich, wenn zu einem Formkörper verarbeitet, bevorzugt durch Spritzguss oder Extrusion, für Anwendungen insbesondere im Automobil- und Elektro-/Elektronik-Bereich, eignet.

Entsprechend betrifft die vorliegende Erfindung auch **Formkörper,** vorzugsweise hergestellt durch Spritzguss oder Extrusion, aus einer Polyamidformmasse, wie sie oben beschrieben wurde, oder aufweisend wenigstens einen Bereich oder eine Beschichtung aus einer Polyamidformmasse, wie sie oben beschrieben wurde.

Die erfindungsgemässen thermoplastischen Formmassen respektive daraus hergestellte Formkörper zeichnen sich durch gute mechanische Eigenschaften und gute Oberflächeneigenschaften, beides im trockenen wie im konditionierten Zustand, aus. Die Formkörper besitzen eine ausreichende Steifigkeit und Festigkeit und gleichzeitig eine gute Schlagzähigkeit sowie eine gute Oberflächenqualität, auch in feuchtem Zustand. Dabei handelt es sich vorzugsweise um Formkörper, bei denen die gute Oberflächenqualität zum Tragen kommt. Insbesondere sind die Formkörper ausgewählt aus der Gruppe bestehend aus Sichtteilen und/oder sichtbaren Gehäusen, Abdeckungen oder Rahmen. Die Formkörper können dabei auf unterschiedliche Weise hergestellt werden, z.B. durch Spritzgiessen oder Spritzprägen, oder durch Extrudieren. Ebenso ist eine Weiterbearbeitung der Formkörper, wie z.B. Fräsen, Bohren, Schleifen, Lasermarkieren, - schweissen oder -schneiden möglich.

Verwendung finden die erfindungsgemässen Polyamidformmassen zur Herstellung von Formkörpern, insbesondere Teile eines elektrischen oder elektronischen Bauteils, eines Gehäuses oder eines Gehäusebestandteils, vorzugsweise Gehäuse oder Gehäuseteile für tragbare elektronische Geräte, Verkleidungen oder Abdeckungen, Haushaltsgeräte, Haushaltsmaschinen, Brillengestelle, Brillenrahmen, Sonnenbrillen, Fotoapparate, Ferngläser, dekorative Gegenstände, Geräte und Apparate für die Telekommunikation und Unterhaltungselektronik, Innen und Aussenteile im Automobilsektor und im Bereich von anderen Transportmitteln, Innen und Aussenteile, vorzugsweise mit tragender oder mechanischer Funktion im Bereich Elektro, Möbel, Sport, Maschinenbau, Sanitär und Hygiene, Medizin, Energie- und Antriebstechnik, insbesondere bevorzugt Mobiltelefone, Smartphones, Organizer, Laptop Computer, Notebook Computer, Tablet Computer, Radios, Kameras, Uhren, Rechner, Sensorgehäuse, Messgeräte, Abspielgeräte für Musik oder Video, Navigationsgeräte, GPS Geräte, elektronische Bilderrahmen, externe Festplatten und andere elektronische Speichermedien.

Weitere Ausführungsformen sind in den abhängigen Ansprüchen angegeben.

### BESCHREIBUNG BEVORZUGTER AUSFÜHRUNGSFORMEN

Bevorzugte Ausführungsformen der Erfindung werden im Folgenden anhand der Ausführungsbeispiele beschrieben, die lediglich zur Erläuterung dienen und nicht einschränkend auszulegen sind.

### Herstellung der Formmassen und der Prüfkörper:

Die Formmassen der Zusammensetzung in den folgenden Tabellen 1 und 2 wurden auf einen Zweiwellenextruder der Fa. Werner u. Pfleiderer Typ ZSK25 hergestellt. Die verschiedenen Polyamid-Granulate wurden zusammen mit den Stabilisatoren und Additiven vermischt und in die Einzugszone dosiert. Die Füllstoffe (Glasfaser, Glimmer Kaolin, Calciumcarbonat, Hohlglaskugeln und Glasflakes) wurden über einen Sidefeeder 3 Gehäuseeinheiten vor der Düse in die Polymerschmelze dosiert. Die Gehäusetemperatur wurde als aufsteigendes Profil bis 290 °C (für PA-4 und PA-5: bis 320 °C) eingestellt. Die Compoundierung erfolgte bei 200 UPM und einem Durchsatz von 15 kg/h. Die ausgetragenen Stränge wurden nach Kühlung im Wasserbad granuliert und das so erhaltene Granulat bei 100 °C für 24 Stunden getrocknet.

Die Prüfkörper wurden auf einer Arburg Spritzgiessanlage Allrounder 320-210-750 hergestellt, wobei die Zylindertemperaturen von 275 bis 280 °C (für PA-4 und PA-5: bis 310 °C) und eine Schneckendrehzahl von 250 UPM eingestellt wurden. Die Werkzeugtemperatur betrug 100 °C (für PA-4 und PA-5: 130 °C).

### Messung der Eigenschaften:

Die Messungen wurden nach folgenden Normen und an folgenden Prüfkörpern durchgeführt:
Prüfkörper im trockenen Zustand werden nach dem Spritzguss mindestens 48 h bei Raumtemperatur in trockener Umgebung, d.h. über Silicagel gelagert.

Konditionierte Prüfkörper, mit Ausnahme der Prüfkörper für die Glanzmessung, werden nach DIN EN ISO 1110:1998 für 14 Tage bei 72 °C und 62 % relativer Feuchte gelagert. Das thermische Verhalten, der Schmelzpunkt (Tm), die Schmelzenthalpie (ΔHm) und die Glasübergangstemperatur (Tg), wurde anhand der ISO-Norm 11357-1, -2 und -3 (2013-04) am Granulat bestimmt. Die Differential Scanning Calorimetry (DSC) wurde mit Aufheizrate von 20 K /min durchgeführt.

Die relative Viskosität (ηrel) wurde bestimmt nach DIN EN ISO 307 (2013-08) an Lösungen von 0.5 g Polymer gelöst in 100 ml m-Kresol bei einer Temperatur von 20 °C. Als Probe wurde Granulat verwendet.

Zug-E-Modul, Bruchspannung und Bruchdehnung wurden nach ISO 527 (2012-06) mit einer Zuggeschwindigkeit von 1 mm/min (Zug-E-Modul) bzw. mit einer Zuggeschwindigkeit von 5 mm/min (Bruchspannung, Bruchdehnung) am ISO-Zugstab, Norm ISO/CD 3167 (2014-11), Typ A1, 170 x 20/10 x 4 mm bei Temperatur 23 °C im trockenen und konditionierten Zustand bestimmt.

Die Bestimmung der Schlagzähigkeit nach Charpy wurde gemäss ISO 179/2*eU (1997, * 2 = instrumentiert) bei 23°C an einem ISO-Prüfstab, Typ B1 (Masse 80 x 10 x 4 mm), hergestellt gemäss der Norm ISO/CD 3167 (2003), im trockenen und konditionierten Zustand durchgeführt.

Der Glanz wurde an Platten der Dimension 60x60x2mm mit einem Gerät des Typs Minolta Multi Gloss 268 unter einem Winkel von 60° und bei einer Temperatur von 23°C nach ISO 2813 (2015-02) bestimmt. Der Glanzwert wird in dimensionslosen Glanzeinheiten (GU, gloss units) angegeben. Prüfkörper im trockenen Zustand wurden nach dem Spritzguss 48 h bei Raumtemperatur in trockener Umgebung, d.h. über Silicagel gelagert. Für die Konditionierung wurden die Platten für 120 Stunden bei 85 °C und einer relativen Luftfeuchte von 85% gelagert.

**Tabelle 1: Erfindungsgemässe Beispiele**

| **Komponenten** | **Einheit** | **B1** | **B2** | **B3** | **B4** | **B5** | **B6** | **B7** | **B8** |
|---|---|---|---|---|---|---|---|---|---|
| PA-1 | Gew.-% | 37.1 | 37.1 | 37.1 | 33.3 | 40.8 | | | 32.3 |
| PA-2 | Gew.-% | 12.3 | 12.3 | 12.3 | 11.1 | 13.6 | | 12.3 | |
| PA-3 | Gew.-% | | | | | | 49.4 | | |
| PA-4 | Gew.-% | | | | | | | 37.1 | |
| PA-5 | Gew.-% | | | | | | | | 12.3 |
| PA-6 | Gew.-% | | | | | | | | 5.0 |
| Glasfaser Typ A | Gew.-% | 25.0 | | | | 25.0 | | | |
| Glasfaser Typ B | Gew.-% | | 25.0 | 20.0 | 25.0 | | 25.0 | 25.0 | 25.0 |
| Flake Typ A | Gew.-% | 25.0 | 25.0 | 30.0 | 30.0 | 20.0 | 25.0 | 25.0 | 25.0 |
| Stabilisator | Gew.-% | 0.6 | 0.6 | 0.6 | 0.6 | 0.6 | 0.6 | 0.6 | 0.4 |
| | | | | | | | | | |
| E-Modul (trocken) | MPa | 15'900 | 16'000 | 15'700 | 17'200 | 15'300 | 15900 | 15400 | 15500 |
| E-Modul (konditioniert) | MPa | 14'900 | 15'100 | 14'700 | 16'400 | 14'300 | 15700 | 15540 | 15200 |
| Bruchspannung (trocken) | MPa | 220 | 233 | 207 | 236 | 195 | 212 | 209 | 237 |
| Bruchspannung (konditioniert) | MPa | 186 | 195 | 178 | 201 | 178 | 188 | 205 | 205 |
| Bruchdehnung (trocken) | % | 2.5 | 3.0 | 3.1 | 2.8 | 3.3 | 2.2 | 2.0 | 2.8 |
| Bruchdehnung (konditioniert) | % | 2.4 | 2.9 | 3.0 | 2.8 | 3.2 | 2.0 | 2.0 | 2.8 |
| Schlagzähigkeit (trocken) | kJ/m² | 74 | 85 | 78 | 78 | 82 | 70 | 65 | 86 |
| Schlagzähigkeit (konditioniert) | kJ/m² | 71 | 74 | 73 | 73 | 77 | 65 | 63 | 80 |
| Glanz 60° (trocken) | | 81 | 79 | 80 | 82 | 74 | 91 | 86 | 85 |
| Glanz 60° (konditioniert, 85°C, 85% r.F.) | | 82 | 77 | 82 | 83 | 74 | 80 | 93 | 84 |

**Tabelle 2: Vergleichsbeispiele**

| **Komponenten** | **Einheit** | **VB1** | **VB2** | **VB3** | **VB4** | **VB5** | **VB6** | **VB7** | **VB8** | **VB9** |
|---|---|---|---|---|---|---|---|---|---|---|
| PA-1 | Gew.-% | 37.1 | 37.1 | 37.1 | 37.1 | 37.1 | | | 37.1 | 31.4 |
| PA-2 | Gew.-% | 12.3 | 12.3 | 12.3 | 12.3 | 12.3 | 12.3 | | 12.3 | 12.0 |
| PA-3 | Gew.-% | | | | | | | 49.4 | | |
| PA-4 | Gew.-% | | | | | | 37.1 | | | |
| Glasfaser Typ A | Gew.-% | | | | | | 50.0 | | | |
| Glasfaser Typ B | Gew.-% | 20.0 | 20.0 | | 25.0 | 50.0 | | 50.0 | 25 | 18.0 |
| Glimmer | Gew.-% | | | | 25.0 | | | | | |
| Kaolin | Gew.-% | 30.0 | | | | | | | | |
| Calciumcarbonat | Gew.-% | | 30.0 | | | | | | | |
| Glaskugeln | Gew.-% | | | 50.0 | | | | | | |
| Flake Typ B | Gew.-% | | | | | | | | 25 | 28.0 |
| SZM | Gew.-% | | | | | | | | | 10.0 |
| Stabilisator | Gew.-% | 0.6 | 0.6 | 0.6 | 0.6 | 0.6 | 0.6 | 0.6 | 0.6 | 0.6 |
| | | | | | | | | | | |
| E-Modul (trocken) | MPa | 11'000 | 10'700 | 6'200 | 13'100 | 16'800 | 17000 | 16'900 | 15'200 | 10'100 |
| E-Modul (konditioniert) | MPa | 9'800 | 9'700 | 5'400 | 11'700 | 15'700 | 17100 | 15'800 | 14'200 | 9'600 |
| Bruchspannung (trocken) | MPa | 154 | 166 | 85 | 166 | 235 | 222 | 227 | 201 | 103 |
| Bruchspannung (konditioniert) | MPa | 125 | 131 | 61 | 133 | 215 | 213 | 166 | 170 | 89 |
| Bruchdehnung (trocken) | % | 2.3 | 2.4 | 7.9 | 1.9 | 2.4 | 1.8 | 2.4 | 2.5 | 2.2 |
| Bruchdehnung (konditioniert) | % | 2.2 | 2.3 | 8.0 | 1.9 | 2.7 | 1.8 | 3.1 | 2.3 | 2.5 |
| Schlagzähigkeit (trocken) | kJ/m² | 41 | 44 | 21 | 44 | 78 | 62 | 55 | 40 | 38 |
| Schlagzähigkeit (konditioniert) | kJ/m² | 33 | 38 | 20 | 40 | 75 | 60 | 48 | 34 | 39 |
| Glanz 60° (trocken) | | 78 | 80 | 78 | 78 | 63 | 91 | 66 | 70 | 12 |
| Glanz 60° (konditioniert, 85°C, 85% r.F.)) | | 65 | 64 | 70 | 77 | 7 | 5 | 50 | 56 | 8 |

**Tabelle 3: Eingesetzte Komponenten und Rohstoffe**

| **Bezeichnung** | **Beschreibung** | **Hersteller** |
|---|---|---|
| PA-1 (Typ A1) | Polyamide 66, rel. Viskosität: 1.84, Schmelzpunkt: 262°C, teilkristallin | Radici (IT) |
| PA-2 (Typ A3) | Teilaromatisches Copolyamid 6I/6T (67:33), rel. Viskosität: 1.52, Glastemperatur: 125°C, amorph | EMS-CHEMIE (CH) |
| PA-3 (Typ A2) | Teilaromatisches Copolyamid PA66/6I/6T (70/20/10), rel. Viskosität: 1.65, Schmelzpunkt: 234 °C, teilkristallin | EMS-CHEMIE (CH) |
| PA-4 (Typ A2) | Teilaromatisches Copolyamid PA10T/6T (85:15), rel. Viskosität: 1.72, Schmelzpunkt: 295°C, teilkristallin | EMS-CHEMIE (CH) |
| PA-5 (Typ A2) | Teilaromatisches Copolyamid PA6T/BacT/66/Bac6 (68.5/23.5/6/2), rel. Viskosität: 1.62, Schmelzpunkt: 320°C, teilkristallin | EMS-CHEMIE (CH) |
| PA-6 (Typ A3) | Teilaromatisches Copolyamid 6I/6T/612/MACMI/ MACMT/MACM 12 (20/20/24/11/11/14), rel. Viskosität: 1.73, Glastemperatur: 140 °C, amorph | EMS-CHEMIE (CH) |
| Glasfaser Typ A | Glasfaser CSG3PA-820 mit flachem Querschnitt; Querschnittsachsen von 28 µm und 7 µm, Aspektverhältnis der Querschnittsachsen = 4; Länge: 3 mm | Nittobo (JP) |
| Glasfaser Typ B | E-Glasfaser ECT301 HP mit rundem Querschnitt, Durchmesser 10 µm), Länge: 4.5 mm | Chongqing Polycomp Int. Corp. (CN) |
| Glimmer | Muskovit Glimmer Mica SFG70, Dichte: 2.85 g/cm³; mittlerer Durchmesser: 7 µm (d98), Aspektverhältnis: 30: 1 | Aspanger Bergbau und Mineralwerke (AT) |
| Kaolin | Kaolin Translink 445, d10 = 0,998 µm, d50 = 3,353 µm, d90 = 1 1,875 µm, bestimmt mittels Lichtstreuung mit einem Malvern Mastersizer | BASF (DE) |
| Calciumcarbonat | Millicarb, Durchmesser: 3 µm (d50), Dichte: 2.6-2.8 g/cm3 | Omya (CH) |
| Glaskugeln | Glaskugeln 3000E CP-03 aus E-Glas, Durchmesser: 30-50 µm | Potters Industries (US) |
| Stabilisator | 10 Gew.-Teile einer Mischung aus Irganox 1010 (CAS 6683-19-8, phenolisches Antioxidans von BASF) und Anox 20 (CAS 6683-19-8, phenolisches Antioxidans von Addivant) im Verhältnis 7:3 sowie 2 Gew.-Teile Hostanox PAR24 (CAS: 31570-04-4, Tris(2,4-ditert-butylphenyl)phosphite) | BASF (DE) Clariant (DE) |
| Glasflake Typ A | Glas-Flakes MEG 160FY-M03 aus E-Glas, Teilchendurchmesser (d50): 160 µm, Teilchendicke: 0.7 µm, Aminosilan-Sizing | Nippon Sheet Glass Co. (JP) |
| Glasflake Typ B | Glas-Flakes Ref 160 A aus E-Glas, Teilchendurchmesser (d50): 160 µm, Teilchendicke: 5 µm, Aminosilan-Sizing | NGF Europe (GB) |
| Schlagzähmodifikator (SZM) | Fusabond N493, Ethen-Octen-Copolymer gepfropft mit Maleinsäureanhydrid | DuPont (US) |

### Diskussion der Resultate:

Die Beispiele B1-B8 mit Zusammensetzungen nach der Erfindung zeigen durchwegs gute mechanische Eigenschaften, mit geringen Unterschieden zwischen trockenem Zustand und konditioniertem Zustand (E-Modul, Bruchspannung, Bruchdehnung, Schlagzähigkeit). Gute Eigenschaften zeigen sich insbesondere auch beim Glanz, dies wiederum weitgehend unabhängig davon ob trocken oder konditioniert. Diese Eigenschaften werden für unterschiedlichen Gehalt an Glasfasern dokumentiert und für Glasfasern mit rundem Querschnitt (Typ B) und mit flachem Querschnitt (Typ A). Flache Glasfasern zeigen insbesondere beim Glanz bessere Eigenschaften. Die Eigenschaften werden in den Beispielen auch dokumentiert für unterschiedliche Polyamid-Matrix Zusammensetzungen, wobei in Abhängigkeit davon auch leicht unterschiedliche Eigenschaften erhalten werden, besonders gute Glanzwerte im konditionierten Zustand werden erhalten für eine Mischung aus amorphen 6I/6T mit 10T/6T (B7) und besonders gute Glanzwerte im trockenen Zustand werden erhalten für eine Matrix ausschliesslich aus 66/6I/6T (B6). Weiter werden die Eigenschaften dokumentiert für unterschiedlichen Gehalt an Glas Flakes: ein höherer Anteil von Glas Flakes kann dazu verwendet werden, E Modul und Bruchspannung sowie auch Glanz zu erhöhen, Bruchdehnung und Schlagzähigkeit können nur knapp gehalten werden (vergleiche B2 gegenüber B4 und B1 gegenüber B5).

VB1 bis VB4 verwenden alternative Füllstoffe zu Komponente (C) bzw. (B) u. (C). Bei VB1 und VB2 werden ausgehend von einer Zusammensetzung im Wesentlichen wie bei B3 die Glas Flakes ersetzt durch Kaolin respektive Calziumcarbonat mit im Wesentlichen gleichen Proportionen. Es resultieren durchwegs schlechtere mechanische Eigenschaften, und auch der Glanz im konditionierten Zustand wird schlechter. Bei Beispiel VB3 werden ausgehend von Beispiel B3 die Glasfasern und die Glas Flakes ersetzt durch Glaskugeln. Es resultieren schlechtere mechanische Eigenschaften und schlechterer Glanz. Bei VB4 werden ausgehend von B2 die Glas Flakes ersetzt durch Glimmer, auch hier resultieren durchwegs schlechtere mechanische Eigenschaften und schlechterer Glanz. Bei VB5 werden die Glas Flakes ausgehend von B3 ersetzt durch Glasfasern. Es resultieren bessere Werte für E Modul und Bruchspannung, schlechtere Werte für Bruchdehnung und ähnliche Werte für Schlagzähigkeit. Insbesondere der Glanz, vor allem konditioniert, ist sehr schlecht. Vergleichsbeispiel VB6 lässt sich vergleichen mit B7, runde Glasfasern und Glas Flakes von B7 werden ersetzt durch flache Glasfasern, es resultieren wiederum bessere Werte für E Modul und Bruchspannung, schlechtere Werte für Bruchdehnung und ähnliche Werte für Schlagzähigkeit. Der Glanz ist zwar gut im trockenen Zustand, aber inakzeptabel im konditionierten Zustand. In all diesen Vergleichsbeispielen VB1 bis VB4 wird im Vergleich zu den Beispielen B1 bis B5 mithin eine deutlich niedrigere Steifigkeit (E-Modul), Festfestigkeit (Bruchspannung) und Schlagzähigkeit beobachtet, während der Glanz insbesondere im trockenen Zustand durchaus befriedigend sein kann, auch wenn die konditionierten Werte teilweise deutlich abfallen. VB5 bis VB7, in denen ausschliesslich Glasfasern als Füllstoffe eingesetzt werden, zeichnen sich durch gute mechanische Eigenschaften aus, allein die Bruchdehnung fällt hier niedriger aus. Dagegen ändern sich die Glanzwerte dramatisch, wenn die Probekörper konditioniert werden.

In VB8 und VB9 werden neben Glasfasern nicht-erfindungsgemässe Glas-Flakes mit einer Teilchendicke von 5 µm verwendet. Im Vergleich von B2 mit VB8 wird offensichtlich, dass die mechanischen Eigenschaften durchweg schlechter ausfallen, insbesondere die Schlagzähigkeit. Zudem fällt der Glanz nach Konditionierung deutlich ab. Hier wird der positive Einfluss der erfindungsgemässen dünnen Glas-Flakes offensichtlich. Bei zusätzlicher Verwendung eines Schlagzähmodifiers wie in VB9 werden die mechanischen Eigenschaften, auch die Schlagzähigkeit, dramatisch reduziert. Auch der Glanz sinkt damit auf ein unakzeptables Niveau.

## Patentansprüche

1. Polyamid-Formmasse bestehend aus den Komponenten
(A) 28.0-64.9 Gew.-% wenigstens eines Polyamids,
(B) 15.0-40.0 Gew.-% Glasfasern,
(C) 15.0-35.0 Gew.-% Glasflakes mit einer Teilchendicke im Bereich von 0.3 - 2.0 µm,
(D) 0.1-2.0 Gew.-% Hitzestabilisator,
(E) 0-5.0 Gew.-% Additive
mit der Massgabe, dass die Summe der Komponenten (B) und (C) im Bereich von 35.0 bis 65.0 Gew.-% liegt, bezogen auf die Summe der Komponenten (A) bis (E),
und die Summe der Komponenten (A) bis (E) 100 Gew.-% ergibt.

2. Polyamid-Formmasse nach Anspruch 1, **dadurch gekennzeichnet, dass** der Anteil der **Komponente (A)** im Bereich von 34.0 - 59.8 Gew.-% liegt, vorzugsweise im Bereich von 38.2 - 57.8 Gew.% oder 41.5 - 54.7 Gew.%, jeweils bezogen auf die Summe der Komponenten (A) bis (E).

3. Polyamid-Formmasse nach einem der vorhergehenden Ansprüche, **dadurch gekennzeichnet, dass** die Komponente (A) ausgewählt ist aus der Gruppe bestehend aus: teilkristallinen aliphatischen Polyamiden (A1), teilkristallinen teilaromatischen Polyamiden (A2), und amorphen und/oder mikrokristallinen Polyamiden (A3), oder Mischungen davon, wobei vorzugsweise Komponente (A) eine Mischung aus wenigstens einem teilkristallinen Polyamid (A1, A2) und wenigstens einem amorphen oder mikrokristallinen Polyamid (A3) ist, wobei weiter bevorzugt der Anteil der teilkristallinen Polyamide (A1, A2) in der Komponente (A) dabei 30,0 bis 98,0 Gew.-%, weiter bevorzugt im Bereich von 40,0 bis 95,0 Gew.-% und besonders bevorzugt im Bereich von 50,0 bis 90,0 Gew.-%, jeweils bezogen auf die Gesamtheit der Komponente (A), beträgt; und/oder dass die Komponente (A) aus teilkristallinen aliphatischen Polyamiden (A1) oder teilkristallinen teilaromatischen Polyamiden (A2) oder deren Mischungen besteht, bevorzugt ausgewählt aus der Gruppe bestehend aus: PA 66, PA 610, PA 612, PA 10T/6T, PA 66/6I/6T, PA 6T/66/BacT/Bac6, PA 6T/610/BacT/Bac10, PA 6T/612/BacT/Bac12, PA 6T/BacT/6I/BacI, vorzugsweise mit einer relativen Viskosität im Bereich von 1.60 bis 2.30, sowie deren Mischungen.

4. Polyamid-Formmasse nach einem der vorhergehenden Ansprüche, **dadurch gekennzeichnet, dass** die Komponente (A) aus einer der folgenden Mischungen besteht:
(A1) 50 - 90 Gew.-% teilkristallines, aliphatisches Polyamid 66
(A3) 10 - 50 Gew.-% amorphes, teilaromatisches Polyamid 6I/6T mit 55 bis 85 Mol-% Hexamethylenisophthalamid-Einheiten und 15 bis 45 Mol-% Hexamethylenterephthalamid - Einheiten,
wobei die Anteile von (A1) und (A3) 100 Gew.-% der Polyamid-Mischung (A) ausmachen;
oder
(A1) 50 - 90 Gew.-% teilkristallines, aliphatisches Polyamid 66
(A2) 10 - 50 Gew.-% teilkristallines, teilaromatisches Polyamid 6T/66/BacT/Bac6, 6T/6I/BacT/BacI oder 6T/66/6I/BacT/Bac6/BacI, wobei die Diaminkomponente aus 65 bis 85 Mol-Anteilen 1,6-Hexandiamin und 15 bis 35 Mol-Anteilen Bis(aminomethyl)-cyclohexan, insbesondere 1,3-Bis(aminomethyl)-cyclohexan, ausgewählt ist, sowie die Dicarbonsäurekomponente aus 64 bis 100 Mol-Anteilen Terephthalsäure, 0 bis 18 Mol-Anteilen Isophthalsäure sowie 0 bis 18 Mol-Anteilen einer oder mehrerer aliphatischer Dicarbonsäuren mit 6 bis 18 C-Atomen besteht, und wobei die jeweilige Summe von Diamin- bzw. Dicarbonsäurekomponente 100 Mol-Anteile beträgt,
wobei die Anteile von (A1) und (A2) 100 Gew.-% der Polyamid-Mischung (A) ausmachen;
oder
(A2) 50 - 90 Gew.-% teilkristallines, teilaromatisches Polyamid 10T/6T
(A3) 10 - 50 Gew.-% amorphes, teilaromatisches Polyamid 6I/6T mit 55 bis 85 Mol-% Hexamethylenisophthalamid-Einheiten und 15 bis 45 Mol-% Hexamethylenterephthalamid-Einheiten,
wobei die Anteile von (A2) und (A3) 100 Gew.-% der Polyamid-Mischung (A) ausmachen;
oder
(A1) 50 - 90 Gew.-% teilkristallines, aliphatisches Polyamid 66
(A2) 8 - 30 Gew.-% teilkristallines, teilaromatisches Polyamid PA6T/BacT/66/Bac6, 6T/BacT/6I/BacI oder 6T/BacT/6I/BacI/66/Bac6, wobei die Diaminkomponente aus 65 bis 85 Mol-Anteilen 1,6-Hexandiamin und 15 bis 35 Mol-Anteilen Bis(aminomethyl)-cyclohexan, insbesondere 1,3-Bis(aminomethyl)-cyclohexan, ausgewählt ist, sowie die Dicarbonsäurekomponente aus 64 bis 100 Mol-Anteilen Terephthalsäure, 0 bis 18 Mol-Anteilen Isophthalsäure sowie 0 bis 18 Mol-Anteilen einer oder mehrerer aliphatischer Dicarbonsäuren mit 6 bis 18 C-Atomen besteht, und wobei die jeweilige Summe von Diamin- bzw. Dicarbonsäurekomponente 100 Mol-Anteile beträgt,
(A3) 2 - 20 Gew.-% amorphes Polyamid 6I/6T/612/MACMI/- MACMT/MACM12, wobei die Zusammensetzung bevorzugt je 18-30 mol-% 6I- und 6T-Einheiten, 12-26 mol-% 612-Einheiten, sowie je 6-16 mol-% MACM12-, MACMI- und MACMT-Einheiten umfasst, wobei die Summe aller PA-Einheiten 100 mol-% ergeben,
wobei die Anteile von (A1), (A2) und (A3) 100 Gew.-% der Polyamid-Mischung (A) ausmachen.

5. Polyamid-Formmasse nach einem der vorhergehenden Ansprüche, **dadurch gekennzeichnet, dass** der Anteil der **Komponente (B)** im Bereich von 17.0-35.0 Gew.-% liegt, vorzugsweise im Bereich von 18.0-32.0 Gew.% oder 20.0-30.0 Gew.%, jeweils bezogen auf die Summe der Komponenten (A) bis (E).

6. Polyamid-Formmasse nach einem der vorhergehenden Ansprüche, **dadurch gekennzeichnet, dass** es sich bei den Glasfasern der Komponente (B) um E-Glasfasern oder S-Glasfasern handelt;
und/oder dass die Komponente (B) aufgebaut ist aus Glasfasern mit einem kreisförmigen Querschnitt, insbesondere vorzugsweise mit einem Durchmesser im Bereich von 5-20 µm oder im Bereich von 5-13 µm oder 6-10 µm,
und/oder es sich bei den Glasfasern der Komponente (B) um solche mit einem nicht-kreisförmigen Querschnitt handelt, wobei das Abmessungsverhältnis von der Hauptquerschnittsachse zur senkrecht darauf stehenden Nebenquerschnittsachse bevorzugtermassen grösser als 2.5 ist, insbesondere bevorzugt im Bereich von 2.5-6 oder 3-5.

7. Polyamid-Formmasse nach einem der vorhergehenden Ansprüche, **dadurch gekennzeichnet, dass** der Anteil der **Komponente (C)** im Bereich von 16.0-33.0 Gew.-% liegt, vorzugsweise im Bereich von 18.0-32.0 oder 20.0-30.0 Gew.%, jeweils bezogen auf die Summe der Komponenten (A) bis (E).

8. Polyamid-Formmasse nach einem der vorhergehenden Ansprüche, **dadurch gekennzeichnet, dass** der mittlere Teilchendurchmesser (d50) der Komponente (C) im Bereich von 20-300 µm, weiter bevorzugt im Bereich von 50-200 µm oder insbesondere vorzugsweise im Bereich von 80-170 µm liegt;
und/oder dass die Teilchendicke der Komponente (C) im Bereich von 0.4 bis 1.7, insbesondere bevorzugt im Bereich von 0.5 bis 1.5 µm liegt.

9. Polyamid-Formmasse nach einem der vorhergehenden Ansprüche, **dadurch gekennzeichnet, dass** die Summe der Komponenten (B) und (C), bezogen auf die Summe der Komponenten (A) - (E), im Bereich von 40.0-60.0 Gew.-% liegt vorzugsweise im Bereich von 42.0 bis 57.0 Gew.-% oder 45.0 - 55.0 Gew.-%.

10. Polyamid-Formmasse nach einem der vorhergehenden Ansprüche, **dadurch gekennzeichnet, dass** der Anteil der **Komponente (D)** im Bereich von 0.2-2.0 Gew.-% liegt, vorzugsweise im Bereich von 0.2-1.8 oder von 0.3-1.5 Gew.-%, jeweils bezogen auf die Summe der Komponenten (A) bis (E).

11. Polyamid-Formmasse nach einem der vorhergehenden Ansprüche, **dadurch gekennzeichnet, dass** es sich bei der Komponente (D) um organische Stabilisatoren; bevorzugt frei an Cu-Oxid oder -Salzen, handelt,
und/oder dass die Komponente (D) ausgewählt ist aus der folgenden Gruppe:
Verbindungen des ein- oder zweiwertigen Kupfers, insbesondere Salze des ein- oder zweiwertigen Kupfers mit anorganischen oder organischen Säuren oder ein- oder zweiwertigen Phenolen, die Oxide des ein- oder zweiwertigen Kupfers, oder die Komplexverbindungen von Kupfersalzen mit Ammoniak, Aminen, Amiden, Lactamen, Cyaniden oder Phosphinen, bevorzugt Cu(I)- oder Cu(II)-Salze der Halogenwasserstoffsäuren, der Cyanwasserstoffsäuren oder die Kupfersalze der aliphatischen Carbonsäuren, wobei besonders bevorzugt die einwertigen Kupferverbindungen CuCl, CuBr, CuI, CuCN und Cu2O, sowie die zweiwertigen Kupferverbindungen CuCl2, CuSO4, CuO, Kupfer(II)acetat oder Kupfer(II)stearat sind, oder Mischungen dieser Verbindungen, wobei diese Kupfer Verbindungen als solche oder bevorzugtermassen in Form von Konzentraten eingesetzt werden, wobei unter Konzentrat ein Polymer, vorzugsweise gleicher oder im wesentlichen gleicher chemischer Natur wie Komponente (A), zu verstehen ist, welches das Kupfersalz in hoher Konzentration enthält, und wobei insbesondere bevorzugtermassen die Kupferverbindungen in Kombination mit weiteren Metallhalogeniden, einschliesslich Alkalihalogeniden, wie Nal, KI, NaBr, KBr, eingesetzt werden, wobei das molare Verhältnis von Metallhalogenid zu Kupfer 0.5 bis 20, bevorzugt 1 bis 10 und besonders bevorzugt 2 bis 7 beträgt;
Stabilisatoren auf Basis sekundärer aromatischer Amine,;
Stabilisatoren auf Basis sterisch gehinderter Phenole;
Phosphiten und Phosphoniten, sowie
Mischungen der vorstehend genannten Stabilisatoren.

12. Polyamidformmasse nach einem der vorhergehenden Ansprüche, **dadurch gekennzeichnet, dass** die Komponente (E) in einem Anteil, bezogen auf die Summe der Komponenten (A)-(E), im Bereich 0-4.0 Gew.-%, bevorzugt im Bereich von 0-3.0 Gew.-% und insbesondere bevorzugt im Bereich von 0-2.0 oder von 0.1-2.0 Gew.-%, vorliegt.

13. Polyamid-Formmasse nach einem der vorhergehenden Ansprüche, **dadurch gekennzeichnet, dass** die Komponente (E) ausgewählt ist aus der folgenden Gruppe: Kristallisations-Beschleuniger oder -Verzögerer, Fliesshilfsmittel, Gleitmittel, Entformungsmittel, Pigmente, Farbstoff- und Markierungsstoffe, Verarbeitungshilfsmittel, Antistatika, Russ, Graphit, Kohlenstoffnanoröhrchen, Residuen aus Polymerisationsverfahren wie Katalysatoren, Salze und deren Derivate.

14. Formkörper aus einer Polyamidformmasse nach einem der vorhergehenden Ansprüche oder aufweisend wenigstens einen Bereich oder eine Beschichtung aus einer Polyamidformmasse nach einem der vorhergehenden Ansprüche, vorzugsweise hergestellt durch Spritzguss, Extrusion oder Blasformen, wobei es sich vorzugsweise um einen Formkörper im Bereich von Sichtteilen und/oder sichtbaren Gehäusen, Abdeckungen oder Rahmen, insbesondere um Teile eines elektrischen oder elektronischen Bauteils, eines Gehäuses oder eines Gehäusebestandteils handelt, vorzugsweise Gehäuse oder Gehäuseteile für tragbare elektronische Geräte, Verkleidungen oder Abdeckungen, Haushaltsgeräte, Haushaltsmaschinen, Brillengestelle, Brillenrahmen, Sonnenbrillen, Fotoapparate, Ferngläser, dekorative Gegenstände, Geräte und Apparate für die Telekommunikation und Unterhaltungselektronik, Innen und Aussenteile im Automobilsektor und im Bereich von anderen Transportmitteln, Innen und Aussenteile, vorzugsweise mit tragender oder mechanischer Funktion im Bereich Elektro, Möbel, Sport, Maschinenbau, Sanitär und Hygiene, Medizin, Energie- und Antriebstechnik, insbesondere bevorzugt Mobiltelefone, Smartphones, Organizer, Laptop Computer, Notebook Computer, Tablet Computer, Radios, Kameras, Uhren, Rechner, Sensorgehäuse, Messgeräte, Abspielgeräte für Musik und/oder Video, Navigationsgeräte, GPS Geräte, elektronische Bilderrahmen, externe Festplatten und andere elektronische Speichermedien.

15. Verwendung einer Polyamidformmasse nach einem der Ansprüche 1-13 zur Herstellung eines Formkörpers nach Anspruch 14, **dadurch gekennzeichnet, dass** eine Formmasse nach einem der Ansprüche 1-13 in aufgeschmolzener Form vorgelegt wird und das Formteil in einem Extrusionsverfahren, einem Spritzgussverfahren oder einem Blasformverfahren aus dieser Formmasse gebildet wird.

16. Verfahren zur Herstellung eines Formkörpers nach Anspruch 14, **dadurch gekennzeichnet, dass** eine Formmasse nach einem der Ansprüche 1-13 in aufgeschmolzener Form vorgelegt wird und das Formteil in einem Extrusionsverfahren, einem Spritzgussverfahren oder einem Blasformverfahren aus dieser Formmasse gebildet wird.

## Claims

1. Polyamide moulding composition consisting of the following components
(A) 28.0-64.9 wt% of at least one polyamide,
(B) 15.0-40.0 wt% of glass fibres,
(C) 15.0-35.0 wt% of glass flakes having a particle thickness in the range of 0.3 - 2.0 µm,
(D) 0.1-2.0 wt% of heat stabilizer,
(E) 0-5.0 wt% of additives
with the proviso that the sum of components (B) and (C) is in the range of 35.0 to 65.0 wt%, based on the sum of components (A) to (E),
and the sum of components (A) to (E) makes 100 wt%.

2. Polyamide moulding composition according to Claim 1, **characterized in that** the fraction of **component (A)** is in the range of 34.0 - 59.8 wt%, preferably in the range of 38.2 - 57.8 wt% or 41.5 - 54.7 wt%, based in each case on the sum of components (A) to (E).

3. Polyamide moulding composition according to either of the preceding claims, **characterized in that** component (A) is selected from the group consisting of:
semicrystalline aliphatic polyamides (A1), semicrystalline semiaromatic polyamides (A2), and amorphous and/or microcrystalline polyamides (A3), or mixtures thereof, where preferably component (A) is a mixture of at least one semicrystalline polyamide (A1, A2) and at least one amorphous or microcrystalline polyamide (A3), where more preferably the fraction of the semicrystalline polyamides (A1, A2) in component (A) is 30.0 to 98.0 wt%, more preferably in the range from 40.0 to 95.0 wt% and very preferably in the range from 50.0 to 90.0 wt%, based in each case on the entirety of component (A);
and/or **in that** component (A) consists of semicrystalline aliphatic polyamides (A1) or semicrystalline semiaromatic polyamides (A2) or mixtures thereof, preferably selected from the group consisting of: PA 66, PA 610, PA 612, PA 10T/6T, PA 66/6I/6T, PA 6T/66/BacT/Bac6, PA 6T/610/BacT/Bac10, PA 6T/612/BacT/Bac12, PA 6T/BacT/6I/BacI, preferably having a relative viscosity in the range from 1.60 to 2.30, and also mixtures thereof.

4. Polyamide moulding composition according to any of the preceding claims, **characterized in that** component (A) consists of one of the following mixtures:
(A1) 50 - 90 wt% of semicrystalline aliphatic polyamide 66
(A3) 10 - 50 wt% of amorphous semiaromatic polyamide 6I/6T having 55 to 85 mol% of hexamethyleneisophthalamide units and 15 to 45 mol% of hexamethyleneterephthalamide units,
where the fractions of (A1) and (A3) make up 100 wt% of the polyamide mixture (A);
or
(A1) 50 - 90 wt% of semicrystalline aliphatic polyamide 66
(A2) 10 - 50 wt% of semicrystalline semiaromatic polyamide 6T/66/BacT/Bac6, 6T/6I/BacT/BacI or 6T/66/6I/BacT/Bac6/BacI, where the diamine component is selected from 65 to 85 mole fractions of 1,6-hexanediamine and 15 to 35 mole fractions of bis(aminomethyl)cyclohexane, especially 1,3-bis(aminomethyl)cyclohexane, and the dicarboxylic acid component consists of 64 to 100 mole fractions of terephthalic acid, 0 to 18 mole fractions of isophthalic acid and also 0 to 18 mole fractions of one or more aliphatic dicarboxylic acids having 6 to 18 carbons, and where the respective sum of diamine component and dicarboxylic acid component is 100 mole fractions,
where the fractions of (A1) and (A2) make up 100 wt% of the polyamide mixture (A);
or
(A2) 50 - 90 wt% of semicrystalline semiaromatic polyamide 10T/6T
(A3) 10 - 50 wt% of amorphous semiaromatic polyamide 6I/6T having 55 to 85 mol% of hexamethyleneisophthalamide units and 15 to 45 mol% of hexamethyleneterephthalamide units,
where the fractions of (A2) and (A3) make up 100 wt% of the polyamide mixture (A);
or
(A1) 50 - 90 wt% of semicrystalline aliphatic polyamide 66
(A2) 8 - 30 wt% of semicrystalline semiaromatic polyamide PA6T/BacT/66/Bac6, 6T/BacT/6I/BacI or 6T/BacT/6I/BacI/66/Bac6, where the diamine component is selected from 65 to 85 mole fractions of 1,6-hexanediamine and 15 to 35 mole fractions of bis(aminomethyl)cyclohexane, especially 1,3-bis(aminomethyl)cyclohexane, and the dicarboxylic acid component consists of 64 to 100 mole fractions of terephthalic acid, 0 to 18 mole fractions of isophthalic acid and also 0 to 18 mole fractions of one or more aliphatic dicarboxylic acids having 6 to 18 carbons, and where the respective sum of diamine component and dicarboxylic acid component is 100 mole fractions,
(A3) 2 - 20 wt% of amorphous polyamide 6I/6T/612/MACMI/- MACMT/MACM12, where the composition comprises preferably 18-30 mol% each of 6I and 6T units, 12-26 mol% of 612 units, and also 6-16 mol% each of MACM12, MACMI and MACMT units, where the sum of all the PA units makes 100 mol%,
where the fractions of (A1), (A2) and (A3) make up 100 wt% of the polyamide mixture (A).

5. Polyamide moulding composition according to any of the preceding claims, **characterized in that** the fraction of **component (B)** is in the range of 17.0-35.0 wt%, preferably in the range of 18.0-32.0 wt% or 20.0-30.0 wt%, based in each case on the sum of components (A) to (E).

6. Polyamide moulding composition according to any of the preceding claims, **characterized in that** the glass fibres of component (B) are E-glass fibres or S-glass fibres;
and/or **in that** component (B) is composed of glass fibres having a circular cross section, especially preferably having a diameter in the range of 5-20 µm or in the range of 5-13 µm or 6-10 µm,
and/or the glass fibres of component (B) are fibres having a non-circular cross section, where the dimensional ratio of the principal cross-sectional axis to the secondary cross-sectional axis perpendicular thereto is preferentially greater than 2.5, especially preferably in the range of 2.5-6 or 3-5.

7. Polyamide moulding composition according to any of the preceding claims, **characterized in that** the fraction of **component (C)** is in the range of 16.0-33.0 wt%, preferably in the range of 18.0-32.0 or 20.0-30.0 wt%, based in each case on the sum of components (A) to (E).

8. Polyamide moulding composition according to any of the preceding claims, **characterized in that** the mean particle diameter (d50) of component (C) is in the range of 20-300 µm, more preferably in the range of 50-200 µm or especially preferably in the range of 80-170 µm;
and/or **in that** the particle thickness of component (C) is in the range from 0.4 to 1.7, especially preferably in the range from 0.5 to 1.5 µm.

9. Polyamide moulding composition according to any of the preceding claims, **characterized in that** the sum of components (B) and (C), based on the sum of components (A) - (E), is in the range of 40.0-60.0 wt%, preferably in the range from 42.0 to 57.0 wt% or 45.0 - 55.0 wt%.

10. Polyamide moulding composition according to any of the preceding claims, **characterized in that** the fraction of **component (D)** is in the range of 0.2-2.0 wt%, preferably in the range of 0.2-1.8 or of 0.3-1.5 wt%, based in each case on the sum of components (A) to (E).

11. Polyamide moulding composition according to any of the preceding claims, **characterized in that** component (D) comprises organic stabilizers, preferably free from Cu oxide or Cu salts;
and/or **in that** component (D) is selected from the following group:
Compounds of mono- or divalent copper, especially salts of mono- or divalent copper with inorganic or organic acids or mono- or dihydric phenols, the oxides of mono- or divalent copper, or the complex compounds of copper salts with ammonia, amines, amides, lactams, cyanides or phosphines, preferably Cu(I) or Cu(II) salts of hydrohalic acids, of hydrocyanic acids or the copper salts of aliphatic carboxylic acids, very preferably the monovalent copper compounds CuCl, CuBr, CuI, CuCN and Cu2O, and also the divalent copper compounds CuCl2, CuSO4, CuO, copper(II)acetate or copper(II)stearate, or mixtures of these compounds, where these copper compounds are used as such or preferentially in the form of concentrates, where a concentrate refers to a polymer, preferably of the same or substantially the same chemical nature as component (A), which comprises the copper salt in high concentration, and where especially preferentially the copper compounds are used in combination with further metal halides, including alkali metal halides, such as NaI, KI, NaBr, KBr, where the molar ratio of metal halide to copper is 0.5 to 20, preferably 1 to 10 and more preferably 2 to 7;
Stabilizers based on secondary aromatic amines;
Stabilizers based on sterically hindered phenols;
Phosphites and phosphonites; and also
Mixtures of the aforesaid stabilizers.

12. Polyamide moulding composition according to any of the preceding claims, **characterized in that** component (E) is present in a fraction, based on the sum of components (A)-(E), in the range of 0-4.0 wt%, preferably in the range of 0-3.0 wt% and especially preferably in the range of 0-2.0 or of 0.1-2.0 wt%.

13. Polyamide moulding composition according to any of the preceding claims, **characterized in that** component (E) is selected from the following group: crystallization accelerators or retardants, flow aids, lubricants, mould release agents, pigments, dyes, taggants, processing aids, antistatics, carbon black, graphite, carbon nanotubes, residues from polymerization processes such as catalysts, salts and derivatives thereof.

14. Shaped article made of a polyamide moulding composition according to any of the preceding claims or comprising at least one region or a coating made of a polyamide moulding composition according to any of the preceding claims, preferably produced by injection moulding, extrusion or blow moulding, the article preferably being a shaped article in the sector of facing parts and/or visible housings, covers or frames, especially parts of an electrical or electronic component, of a housing or of a housing constituent, preferably housings or housing parts for portable electronic devices, panels or covers, household appliances, household machines, spectacle frames, eyeglass surrounds, sunglasses, cameras, long-distance-vision glasses, decorative articles, devices and apparatus for telecommunications and consumer electronics, interior and exterior components in the automotive segment and in the sector of other means of transport, interior and exterior components, preferably with carrying or mechanical function, in the sectors of electricals, furniture, sport, mechanical engineering, sanitary and hygiene, medicine, energy and propulsion technology, especially preferably mobile phones, smartphones, organizers, laptop computers, notebook computers, tablet computers, radios, cameras, timepieces, calculators, sensor housings, measuring devices, playback devices for music and/or video, navigation devices, GPS devices, electronic picture frames, external hard drives and other electronic storage media.

15. Use of a polyamide moulding composition according to any of Claims 1-13 for producing a shaped article according to Claim 14, **characterized in that** a moulding composition according to any of Claims 1-13 is introduced in melted form and the shaped part is formed in an extrusion process, an injection moulding process or a blow moulding process from this moulding composition.

16. Method for producing a shaped article according to Claim 14, **characterized in that** a moulding composition according to any of Claims 1-13 is introduced in melted form and the shaped part is formed in an extrusion process, an injection moulding process or a blow moulding process from this moulding composition.

## Revendications

1. Composition de moulage en polyamide constituée des composants suivants
(A) 28,0-64,9 % en poids d'au moins un polyamide,
(B) 15,0-40,0 % en poids de fibres de verre,
(C) 15,0-35,0 % en poids de flocons de verre ayant une épaisseur de particule comprise entre 0,3 et 2,0 µm,
(D) 0,1-2,0 % en poids de stabilisateur thermique,
(E) 0-5,0 % en poids d'additifs
à condition que la somme des composants (B) et (C) soit comprise entre 35,0 et 65,0 % en poids, sur la base de la somme des composants (A) à (E),
et la somme des composants (A) à (E) fait 100 % en poids.

2. Composition de moulage en polyamide selon la revendication 1, **caractérisée en ce que** la fraction du composant (A) se situe dans la plage de 34,0 - 59,8 % en poids, de préférence dans la plage de 38,2 - 57,8 % en poids ou 41,5 - 54,7 % en poids, sur la base dans chaque cas de la somme des composants (A) à (E).

3. Composition de moulage en polyamide selon l'une ou l'autre des revendications précédentes, **caractérisée en ce que** le composant (A) est choisi dans le groupe constitué par : des polyamides aliphatiques semi-cristallins (A1), des polyamides semi-aromatiques semi-cristallins (A2) et des polyamides amorphes et/ou microcristallins (A3) ou des mélanges de ceux-ci, le composant (A) étant de préférence un mélange d'au moins un polyamide semi-cristallin (A1, A2) et d'au moins un polyamide amorphe ou microcristallin (A3), la fraction des polyamides semi-cristallins (A1, A2) dans le composant (A) étant de préférence de 30. 0 à 98,0 % en poids, de préférence dans la plage de 40,0 à 95,0 % en poids et de préférence dans la plage de 50,0 à 90,0 % en poids, par rapport à la totalité du composant (A); et/ou **en ce que** le composant (A) est constitué de polyamides aliphatiques semi-cristallins (A1) ou de polyamides semi-aromatiques semi-cristallins (A2) ou de mélanges de ceux-ci, de préférence choisis dans le groupe constitué par : PA 66, PA 610, PA 612, PA 10T/6T, PA 66/6I/6T, PA 6T/66/BacT/Bac6, PA 6T/610/BacT/Bac10, PA 6T/612/BacT/Bac12, PA 6T/BacT/6I/BacI, ayant de préférence une viscosité relative comprise entre 1,60 et 2,30, ainsi que leurs mélanges.

4. Composition de moulage en polyamide selon l'une des revendications précédentes, **caractérisée en ce que** le composant (A) est constitué de l'un des mélanges suivants :
(A1) 50 à 90 % en poids de polyamide 66 aliphatique semi-cristallin
(A3) 10 à 50 % en poids de polyamide 6I/6T semi-aromatique amorphe comportant 55 à 85 % en moles de motifs hexaméthylèneisophtalamide et 15 à 45 % en moles de motifs hexaméthylènetéréphtalamide,
où les fractions de (A1) et (A3) constituent 100 % en poids du mélange de polyamides (A) ;
ou
(A1) 50 - 90 % en poids de polyamide 66 aliphatique semi-cristallin
(A2) 10 à 50 % en poids de polyamide semi-aromatique semi-cristallin 6T/66/BacT/Bac6, 6T/6I/BacT/BacI ou 6T/66/6I/BacT/Bac6/BacI, où le composant diamine est choisi parmi 65 à 85 fractions molaires de 1,6-hexanediamine et 15 à 35 fractions molaires de bis(aminométhyl)cyclohexane, en particulier le 1,3-bis(aminométhyl)cyclohexane, et le composant acide dicarboxylique est constitué de 64 à 100 fractions molaires d'acide téréphtalique, de 0 à 18 fractions molaires d'acide isophtalique ainsi que de 0 à 18 fractions molaires d'un ou plusieurs acides dicarboxyliques aliphatiques ayant 6 à 18 atomes de carbone, et où la somme respective du composant diamine et du composant acide dicarboxylique est de 100 fractions molaires,
où les fractions de (A1) et (A2) constituent 100 % en poids du mélange de polyamides (A) ;
ou
(A2) 50 - 90 % en poids de polyamide semi-aromatique semi-cristallin 10T/6T
(A3) 10 à 50 % en poids de polyamide 6I/6T semi-aromatique amorphe comportant 55 à 85 % en moles de motifs hexaméthylèneisophtalamide et 15 à 45 % en moles de motifs hexaméthylènetéréphtalamide,
où les fractions de (A2) et (A3) constituent 100 % en poids du mélange de polyamides (A) ;
ou
(A1) 50 - 90 % en poids de polyamide 66 aliphatique semi-cristallin
(A2) 8 à 30 % en poids de polyamide semi-aromatique semi-cristallin PA6T/BacT/66/Bac6, 6T/BacT/6I/BacI ou 6T/BacT/6I/BacI/66/Bac6, où le composant diamine est choisi parmi 65 à 85 fractions molaires de 1,6-hexanediamine et 15 à 35 fractions molaires de bis(aminométhyl)cyclohexane, en particulier de 1,3-bis(aminométhyl)cyclohexane, et le composant acide dicarboxylique est constitué de 64 à 100 fractions molaires d'acide téréphtalique, de 0 à 18 fractions molaires d'acide isophtalique ainsi que de 0 à 18 fractions molaires d'un ou plusieurs acides dicarboxyliques aliphatiques ayant 6 à 18 atomes de carbone, et où la somme respective du composant diamine et du composant acide dicarboxylique est de 100 fractions molaires,
(A3) 2 - 20 % en poids de polyamide amorphe 6I/6T/612/MACMI/-MACMT/MACM12, où la composition comprend de préférence 18-30 % en moles de chacun des motifs 6I et 6T, 12-26 % en moles de motifs 612, et également 6-16 % en moles de chacun des motifs MACM12, MACMI et MACMT, où la somme de tous les motifs PA fait 100 % en moles,
où les fractions de (A1), (A2) et (A3) constituent 100 % en poids du mélange de polyamides (A).

5. Composition de moulage en polyamide selon l'une quelconque des revendications précédentes, **caractérisée en ce que** la fraction du composant (B) est dans la gamme de 17,0-35,0 % en poids, de préférence dans la gamme de 18,0-32,0 % en poids ou 20,0-30,0 % en poids, sur la base dans chaque cas de la somme des composants (A) à (E).

6. Composition de moulage en polyamide selon l'une des revendications précédentes, **caractérisée en ce que** les fibres de verre du composant (B) sont des fibres de verre E ou des fibres de verre S ;
et/ou **en ce que** le composant (B) est composé de fibres de verre ayant une section transversale circulaire, ayant de préférence un diamètre dans la gamme de 5-20 µm ou dans la gamme de 5-13 µm ou 6-10 µm,
et/ou les fibres de verre du composant (B) sont des fibres ayant une section transversale non circulaire, où le rapport dimensionnel entre l'axe principal de la section transversale et l'axe secondaire de la section transversale qui lui est perpendiculaire est de préférence supérieur à 2,5, surtout de préférence dans la plage de 2,5-6 ou 3-5.

7. Composition de moulage en polyamide selon l'une quelconque des revendications précédentes, **caractérisée en ce que** la fraction du composant (C) se situe dans la plage de 16,0 à 33,0 % en poids, de préférence dans la plage de 18,0 à 32,0 ou de 20,0 à 30,0 % en poids, sur la base dans chaque cas de la somme des composants (A) à (E).

8. Composition de moulage en polyamide selon l'une quelconque des revendications précédentes, **caractérisée en ce que** le diamètre moyen des particules (d50) du composant (C) se situe dans la gamme de 20-300 µm, plus préférablement dans la gamme de 50-200 µm ou surtout préférablement dans la gamme de 80-170 µm ; et/ou **en ce que** l'épaisseur des particules du composant (C) est comprise entre 0,4 et 1,7, de préférence entre 0,5 et 1,5. µm.

9. Composition de moulage en polyamide selon l'une quelconque des revendications précédentes, **caractérisée en ce que** la somme des composants (B) et (C), par rapport à la somme des composants (A) - (E), est dans la gamme de 40,0 à 60,0 % en poids, de préférence dans la gamme de 42,0 à 57,0 % en poids ou de 45,0 à 55,0 % en poids.

10. Composition de moulage en polyamide selon l'une quelconque des revendications précédentes, **caractérisée en ce que** la fraction du composant (D) se situe dans la gamme de 0,2 à 2,0 % en poids, de préférence dans la gamme de 0,2 à 1,8 ou de 0,3 à 1,5 % en poids, sur la base dans chaque cas de la somme des composants (A) à (E).

11. Composition de moulage en polyamide selon l'une des revendications précédentes, **caractérisée en ce que** le composant (D) comprend des stabilisateurs organiques, de préférence exempts d'oxyde de Cu ou de sels de Cu ;
et/ou **en ce que** le composant (D) est choisi dans le groupe suivant :
Composés de cuivre mono- ou divalent, en particulier les sels de cuivre mono- ou divalent avec des acides inorganiques ou organiques ou des phénols mono- ou dihydriques, les oxydes de cuivre mono- ou divalent, ou les composés complexes de sels de cuivre avec l'ammoniac, les amines, les amides, les lactames, les cyanures ou phosphines, de préférence les sels de Cu(l) ou Cu(II) des acides halohydriques, des acides cyanhydriques ou les sels de cuivre des acides carboxyliques aliphatiques, de préférence les composés monovalents du cuivre CuCl, CuBr, CuI, CuCN et Cu2O, ainsi que les composés divalents du cuivre CuCl2, CuSO4, CuO, acétate de cuivre(II) ou stéarate de cuivre(II), ou des mélanges de ces composés, ces composés du cuivre étant utilisés en tant que tels ou de préférence sous forme de concentrés, un concentré désignant un polymère, de préférence de même nature chimique ou essentiellement de même nature chimique que le composant (A), qui contient le sel de cuivre en forte concentration, et les composés du cuivre étant utilisés de manière particulièrement préférentielle en combinaison avec d'autres halogénures métalliques, y compris des halogénures de métaux alcalins, tels que NaI, KI, NaBr, KBr, le rapport molaire entre l'halogénure métallique et le cuivre étant égal à 0. 5 à 20, de préférence 1 à 10 et plus préférentiellement 2 à 7 ;
Stabilisants à base d'amines aromatiques secondaires ;
Stabilisants à base de phénols à empêchement stérique ;
Phosphites et phosphonites ; et aussi
Mélanges des stabilisateurs susmentionnés.

12. Composition de moulage en polyamide selon l'une quelconque des revendications précédentes, **caractérisée en ce que** le composant (E) est présent en une fraction, par rapport à la somme des composants (A)-(E), dans la gamme de 0-4,0 % en poids, de préférence dans la gamme de 0-3,0 % en poids et de manière particulièrement préférée dans la gamme de 0-2,0 ou de 0,1-2,0 % en poids.

13. Composition de moulage en polyamide selon l'une quelconque des revendications précédentes, **caractérisée en ce que** le composant (E) est choisi dans le groupe suivant : accélérateurs ou retardateurs de cristallisation, agents d'écoulement, lubrifiants, agents de démoulage, pigments, colorants, taggants, auxiliaires de traitement, antistatiques, noir de carbone, graphite, nanotubes de carbone, résidus de procédés de polymérisation tels que catalyseurs, sels et dérivés de ceux-ci.

14. Article façonné constitué d'une composition de moulage en polyamide selon l'une des revendications précédentes ou comprenant au moins une région ou un revêtement constitué d'une composition de moulage en polyamide selon l'une des revendications précédentes, de préférence produit par moulage par injection, extrusion ou soufflage, l'article étant de préférence un article façonné dans le secteur des pièces de parement et/ou des boîtiers visibles, les couvercles ou montures, notamment les parties d'un composant électrique ou électronique, d'un boîtier ou d'un élément de boîtier, de préférence les boîtiers ou parties de boîtier d'appareils électroniques portables, les panneaux ou couvercles, les appareils électroménagers, les machines domestiques, les montures de lunettes, les entourages de lunettes, les lunettes de soleil, les appareils photographiques, les lunettes de vision à longue distance, les articles de décoration, appareils et dispositifs de télécommunications et d'électronique grand public, composants intérieurs et extérieurs dans le secteur de l'automobile et dans le secteur des autres moyens de transport, composants intérieurs et extérieurs, de préférence à fonction porteuse ou mécanique, dans les secteurs de l'électricité, de l'ameublement, du sport, de la construction mécanique, de l'hygiène et de la médecine, les technologies de l'énergie et de la propulsion, en particulier, de préférence, les téléphones mobiles, les smartphones, les organisateurs, les ordinateurs portables, les ordinateurs bloc-notes, les tablettes électroniques, les radios, les appareils photo, les montres, les calculatrices, les boîtiers de capteurs, les appareils de mesure, les appareils de lecture de musique et/ou de vidéo, les appareils de navigation, les appareils GPS, les cadres photo électroniques, les disques durs externes et autres supports de stockage électroniques.

15. Utilisation d'une composition de moulage en polyamide selon l'une quelconque des revendications 1-13 pour produire un article moulé selon la revendication 14, **caractérisée en ce qu'**une composition de moulage selon l'une quelconque des revendications 1-13 est introduite sous forme fondue et la pièce moulée est formée dans un procédé d'extrusion, un procédé de moulage par injection ou un procédé de moulage par soufflage à partir de cette composition de moulage.

16. Procédé de production d'un article moulé selon la revendication 14, **caractérisé en ce qu'**une composition de moulage selon l'une quelconque des revendications 1-13 est introduite sous forme fondue et la pièce moulée est formée dans un procédé d'extrusion, un procédé de moulage par injection ou un procédé de moulage par soufflage à partir de cette composition de moulage.
